# EUROPÄISCHE PATENTANMELDUNG

(11) **EP 2 364 935 A2**
(43) Veröffentlichungstag der Anmeldung: **14.09.2011**
(21) Anmeldenummer: 11156041.3
(22) Anmeldetag: 25.02.2011
(51) Int. Cl.: B65G 45/22, B65G 45/24

(54) **Bandreinigungsvorrichtung**

(30) Priorität: 11.03.2010 DE 102010002780
(71) Anmelder: BLANCO CS GmbH + Co KG, 75038 Oberderdingen (DE)
(72) Erfinder: Brinkmann, Georg, 49176, Hilter (DE)
(74) Vertreter: Hoeger, Stellrecht & Partner Patentanwälte

(57) **Zusammenfassung**

Um eine Bandreinigungsvorrichtung zum Reinigen eines Förderbandes (104), umfassend eine Vorreinigungsvorrichtung (284) zum Aufbringen eines Reinigungsmediums auf das Förderband (104) und eine Reinigungsvorrichtung (322) zum zumindest teilweisen Entfernen des Reinigungsmediums von dem Förderband (104), zu schaffen, welche flexibel einsetzbar ist und mit geringem Aufwand gewartet und erforderlichenfalls repariert werden kann, wird vorgeschlagen, dass die Vorreinigungsvorrichtung (284) in einem Vorreinigungsmodul (132) und die Reinigungsvorrichtung (322) in einem separat von dem Vorreinigungsmodul (132) ausgebildeten Reinigungsmodul (134) angeordnet ist und dass das Vorreinigungsmodul (132) und das Reinigungsmodul (134) längs einer Bandlaufrichtung voneinander beabstandet sind.

## Beschreibung

Die vorliegende Erfindung betrifft eine Bandreinigungsvorrichtung zum Reinigen eines Förderbandes, welche eine Vorreinigungsvorrichtung zum Aufbringen eines Reinigungsmediums auf das Förderband und eine Reinigungsvorrichtung zum zumindest teilweisen Entfernen des Reinigungsmediums von dem Förderband umfasst.

Eine solche Bandreinigungsvorrichtung ist beispielsweise aus der EP 0 771 745 A1 bekannt.

Bei der bekannten Bandreinigungsvorrichtung sind die Vorreinigungsvorrichtung und die Reinigungsvorrichtung in ein und demselben Gehäuse in einem festen Abstand voneinander angeordnet. Der Abstand zwischen der Vorreinigungsvorrichtung und der Reinigungsvorrichtung in der Bandlaufrichtung kann nicht verändert werden, und bei einem Defekt der Vorreinigungsvorrichtung oder der Reinigungsvorrichtung müssen beide Vorrichtungen gemeinsam ausgetauscht werden, um eine Reparatur der defekten Vorrichtung durchführen zu können.

Der vorliegenden Erfindung liegt die Aufgabe zugrunde, eine Bandreinigungsvorrichtung der eingangs genannten Art zu schaffen, welche flexibel einsetzbar ist und mit geringem Aufwand gewartet und erforderlichenfalls repariert werden kann.

Diese Aufgabe wird bei einer Bandreinigungsvorrichtung mit den Merkmalen des Oberbegriffs von Anspruch 1 erfindungsgemäß dadurch gelöst, dass die Vorreinigungsvorrichtung in einem Vorreinigungsmodul und die Reinigungsvorrichtung in einem separat von dem Vorreinigungsmodul ausgebildeten Reinigungsmodul angeordnet ist und dass das Vorreinigungsmodul und das Reinigungsmodul längs einer Bandlaufrichtung voneinander beabstandet sind.

Dadurch, dass die Vorreinigungsvorrichtung einerseits und die Reinigungsvorrichtung andererseits in separat voneinander ausgebildeten Modulen angeordnet sind, ist es nicht erforderlich, bei einem Defekt der Vorreinigungsvorrichtung auch die Reinigungsvorrichtung auszubauen bzw. bei einem Defekt der Reinigungsvorrichtung auch die Vorreinigungsvorrichtung auszubauen.

Ferner genügt es, das Vorreinigungsmodul bzw. das Reinigungsmodul einzeln auszutauschen, wenn die Vorreinigungsvorrichtung bzw. die Reinigungsvorrichtung defekt sein sollte.

Die im Vorreinigungsmodul untergebrachte Vorreinigungsvorrichtung und die im Reinigungsmodul untergebrachte Reinigungsvorrichtung können zur Wartung oder zur Reparatur einzeln ausgebaut und wieder montiert werden.

Außerdem ist durch die Aufteilung der Vorreinigungsvorrichtung und der Reinigungsvorrichtung auf separate Module die erfindungsgemäße Bandreinigungsvorrichtung einfach bei einer Fördervorrichtung, welche das zu reinigende Förderband umfasst, nachrüstbar, insbesondere weil für zwei separate Module leichter Platz in der Fördervorrichtung gefunden werden kann als für eine große, sperrige Bandreinigungsvorrichtung, welche in einem einzigen Gehäuse sowohl die Vorreinigungsvorrichtung als auch die Reinigungsvorrichtung vereint, und weil der Abstand zwischen dem Vorreinigungsmodul und dem Reinigungsmodul längs der Bandlaufrichtung frei wählbar ist.

Dadurch, dass der Abstand zwischen dem Vorreinigungsmodul und dem Reinigungsmodul längs der Bandlaufrichtung frei wählbar ist, kann dieser Abstand unter Berücksichtigung der Bandlaufgeschwindigkeit während einer Reinigungsphase der Bandreinigungsvorrichtung so gewählt werden, dass eine Einwirkzeit, während welcher das Reinigungsmedium an dem Förderband verbleibt, bevor es in der Reinigungsvorrichtung wieder von dem Förderband entfernt wird, mindestens einer vorgegebenen Mindesteinwirkzeit entspricht. Diese Mindesteinwirkzeit beträgt vorzugsweise mindestens ungefähr 30 Sekunden, insbesondere mindestens ungefähr 1 Minute.

Der Abstand zwischen der Vorreinigungsvorrichtung in dem Vorreinigungsmodul und der Reinigungsvorrichtung in dem Reinigungsmodul beträgt vorzugsweise mindestens ungefähr 0,5 m, insbesondere mindestens ungefähr 1 m.

Das Vorreinigungsmodul umfasst vorzugsweise ein im Wesentlichen geschlossenes Modulgehäuse mit einer Eintrittsöffnung und einer Austrittsöffnung für das zu reinigende Förderband, und das Reinigungsmodul umfasst vorzugsweise ein separat von dem Modulgehäuse des Vorreinigungsmoduls ausgebildetes eigenes, im Wesentlichen geschlossenes, Modulgehäuse, welches ebenfalls eine Eintrittsöffnung und eine Austrittsöffnung für das zu reinigende Förderband aufweist.

Das zu reinigende Förderband kann grundsätzlich beliebig ausgebildet sein; insbesondere kann das Förderband als ein Kettenband, ein Rundriemenband oder ein Gurtband ausgebildet sein.

Bei einer bevorzugten Ausgestaltung der Erfindung umfasst die Reinigungsvorrichtung mindestens eine Spülmedium-Düse, mittels welcher ein Spülmedium-Strahl mit einer Spülmedium-Strahlachse erzeugbar ist, so dass das Reinigungsmedium (und mittels des Reinigungsmediums gelöster Schmutz) mittels des Spülmedium-Strahls von dem Förderband entfernbar ist.

Dabei ist es für das Entfernen des Reinigungsmediums vom Förderband besonders günstig, wenn die Spülmedium-Strahlachse des Spülmedium-Strahls nicht parallel zu einer Oberflächennormalen des Förderbandes ausgerichtet ist, sondern gegenüber der Oberflächennormalen des Förderbandes geneigt ist.

Unter der Oberflächennormalen des Förderbandes ist hierbei die Senkrechte zu der Oberfläche des Förderbandes zu verstehen, welche mit dem Spülmedium-Strahl beaufschlagt wird.

Wenn die Oberfläche des Förderbandes, die mit dem Spülmedium-Strahl beaufschlagt wird, nicht eben ausgebildet ist, so ist unter der Oberflächennormalen des Förderbandes die mittlere Oberflächennormale in dem durch den Spülmedium-Strahl beaufschlagten Bereich zu verstehen.

Vorzugsweise ist vorgesehen, dass mindestens eine Spülmedium-Strahlachse gegenüber der Oberflächennormalen des Förderbandes um einen Winkel von mindestens ungefähr 1°, insbesondere von mindestens ungefähr 5°, geneigt ist.

Ferner ist vorzugsweise vorgesehen, dass mindestens eine Spülmedium-Strahlachse gegenüber der Oberflächennormalen des Förderbandes um einen Winkel von höchstens ungefähr 20°, insbesondere um einen Winkel von höchstens ungefähr 15°, geneigt ist.

Um zu Erreichen, dass das Reinigungsmedium (und der vom Reinigungsmedium gelöste Schmutz) vom Spülmedium nicht lediglich in der Längsrichtung des Förderbandes verteilt wird, sondern zu einem seitlichen Rand des Förderbandes und über den seitlichen Rand des Förderbandes hinaus von dem Förderband weg bewegt wird, ist es günstig, wenn die senkrechte Projektion mindestens einer Spülmedium-Strahlachse auf eine Hauptfläche des Förderbandes gegenüber der Bandlaufrichtung in dem Reinigungsmodul geneigt ist.

Anders ausgedrückt, ist vorzugsweise mindestens eine Spülmedium-Strahlachse schräg zur Bandlaufrichtung ausgerichtet.

Unter einer Hauptfläche des Förderbandes ist im Falle eines im Wesentlichen ebenen Förderbandes oder eines im Mittel ebenen Förderbandes eine der mit dem Spülmedium beaufschlagten Oberflächen des Förderbandes, d.h. die Innenseite oder die Außenseite des Förderbandes, zu verstehen.

Wenn das Förderband keine ebene Oberfläche aufweist, die mit dem Spülmedium beaufschlagt wird, so soll unter der Hauptfläche des Förderbandes eine Ebene verstanden werden, welche die Bandlaufrichtung und eine senkrecht zur Bandlaufrichtung gerichtete Querrichtung des Förderbandes, längs welcher sich das Förderband erstreckt, enthält.

Wenn die Spülmedium-Strahlachse senkrecht zu der Hauptfläche des Förderbandes ausgerichtet und die senkrechte Projektion der Spülmedium-Strahlachse auf die Hauptfläche daher nur ein Punkt ist, wird statt der senkrechten Projektion der Spülmedium-Strahlachse auf die Hauptfläche die senkrechte Projektion einer durch die Spülmedium-Strahlachse verlaufenden Spülmediumstrahl-Quermittelebene, längs welcher der Spülmedium-Strahl seine kleinste Ausdehnung aufweist, auf die Hauptfläche des Förderbandes herangezogen.

Die senkrechte Projektion mindestens einer Spülmedium-Strahlachse auf eine Hauptfläche des Förderbandes ist vorzugsweise um einen Winkel von mindestens ungefähr 1°, insbesondere um einen Winkel von mindestens ungefähr 5°, gegenüber der Bandlaufrichtung in dem Reinigungsmodul geneigt.

Ferner ist die senkrechte Projektion mindestens einer Spülmedium-Strahlachse auf eine Hauptfläche des Förderbandes gegenüber der Bandlaufrichtung in dem Reinigungsmodul vorzugsweise um einen Winkel von höchstens 40°, insbesondere um einen Winkel von höchstens ungefähr 30°, geneigt.

Besonders günstig zum Abreinigen des Reinigungsmediums von dem Förderband mittels des aufgesprühten Spülmediums ist es, wenn die Strömungsrichtung mindestens eines Spülmedium-Strahls eine Komponente aufweist, welche der Bandlaufrichtung in dem Reinigungsmodul entgegengesetzt ist.

Wenn die Bandreinigungsvorrichtung zur Überstreichung der ganzen Breite des zu reinigenden Förderbandes mehrere Spülmedium-Düsen umfasst, so sind dieselben vorzugsweise so gegeneinander versetzt angeordnet, dass die Spülmedium-Strahlen verschiedener Spülmedium-Düsen einander nicht überlappen. Hierdurch wird erreicht, dass die Spülmedium-Strahlen jede Stelle des Förderbandes mit der gewünschten Strahlrichtung erreichen und die Ausrichtung der Spülmedium-Strahlen nicht durch Kollisionen zwischen einander benachbarten Spülmedium-Strahlen beeinträchtigt wird.

Die Spülmedium-Düsen sind vorzugsweise längs einer schräg zur Bandlaufrichtung verlaufenden Geraden aufeinanderfolgend angeordnet.

Ferner ist mindestens eine Spülmedium-Düse vorzugsweise als eine Flachstrahldüse ausgebildet.

In diesem Fall weist der Spülmedium-Strahl eine durch die Spülmedium-Strahlachse verlaufende Spülmediumstrahl-Längsmittelebene auf, längs welcher der Spülmedium-Strahl seine größte Ausdehnung aufweist, und eine senkrecht zur Spülmediumstrahl-Längsmittelebene durch die Spülmedium-Strahlachse verlaufende Spülmediumstrahl-Quermittelebene auf, längs welcher der Spülmedium-Strahl seine kleinste Ausdehnung aufweist.

Ergänzend zu der Vorreinigungsvorrichtung und der Reinigungsvorrichtung umfasst die Bandreinigungsvorrichtung bei einer bevorzugten Ausgestaltung der Erfindung ferner eine Trocknungsvorrichtung, die mindestens eine Trocknungsdüse umfasst, mittels welcher ein Trocknungsmedium-Strahl mit einer Trocknungsmedium-Strahlachse erzeugbar ist.

Eine solche Trocknungsvorrichtung kann in einem von dem Vorreinigungsmodul und dem Reinigungsmodul separat ausgebildeten Trocknungsmodul angeordnet sein oder aber auch zusammen mit der Reinigungsvorrichtung in dem Reinigungsmodul angeordnet sein.

Durch die Trocknung des Förderbandes nach dem zumindest teilweisen Entfernen des Reinigungsmediums mittels eines durch eine Trocknungsdüse auf das Förderband aufgeblasenen Trocknungsmediums, beispielsweise Druckluft, wird eine besonders rasche Trocknung des Förderbandes erzielt, so dass das die Trocknungsvorrichtung verlassende Förderband sofort wieder für Förderzwecke verwendet werden kann.

Es ist daher möglich, während einer Reinigungsphase der Bandreinigungsvorrichtung den Teil des Förderbandes, welcher sich außerhalb der Bandreinigungsvorrichtung befindet, für Förderzwecke zu verwenden.

Alternativ oder ergänzend zu einer Trocknung mittels eines durch mindestens eine Trocknungsmedium-Düse auf das Förderband geblasenen Trocknungsmediums kann, insbesondere bei Verwendung eines Gurtbandes als Förderband, auch eine Trocknung mittels eines mechanischen Abstreichers vorgesehen sein.

Vorzugsweise ist mindestens eine Trocknungsmedium-Düse als eine Flachstrahldüse ausgebildet.

In diesem Fall weist der Trocknungsmedium-Strahl eine durch die Trocknungsmedium-Strahlachse verlaufende Trocknungsmedium-Längsmittelebene auf, längs welcher der Trocknungsmedium-Strahl seine größte Ausdehnung aufweist, und eine senkrecht zu der Trocknungsmedium-Längsmittelebene durch die Trocknungsmedium-Strahlachse verlaufende Trocknungsmediumstrahl-Quermittelebene, längs welcher der Trocknungsmedium-Strahl seine kleinste Ausdehnung aufweist.

Um mittels eines auf das Trocknungsband geblasenen Trocknungsmediums an dem Förderband anhaftendes Spülmedium und/oder Reinigungsmedium und gegebenenfalls noch anhaftenden Schmutz in wirksamer Weise von dem Förderband entfernen zu können, ist es günstig, wenn mindestens eine Trocknungsmedium-Strahlachse gegenüber einer Oberflächennormalen des Förderbandes in der Trocknungsvorrichtung geneigt ist.

Zur Definition der Oberflächennormalen des Förderbandes gilt das vorstehend im Zusammenhang mit der Ausrichtung des Spülmedium-Strahls Gesagte entsprechend, wobei der mit dem Spülmedium-Strahl beaufschlagte Bereich des Förderbandes durch den von dem Trocknungsmedium-Strahl beaufschlagten Bereich des Förderbandes zu ersetzen ist.

Die Trocknungsmedium-Strahlachse ist vorzugsweise um einen Winkel von mindestens ungefähr 1°, besonders bevorzugt um einen Winkel von mindestens ungefähr 20°, insbesondere um einen Winkel von mindestens ungefähr 40°, gegenüber der Oberflächennormalen des Förderbandes in der Trocknungsvorrichtung geneigt.

Ferner ist es günstig, wenn mindestens eine Trocknungsmedium-Strahlachse gegenüber der Oberflächennormalen des Förderbandes in der Trocknungsvorrichtung um einen Winkel von höchstens ungefähr 60°, vorzugsweise um einen Winkel von höchstens ungefähr 50°, geneigt ist.

Um noch an dem Förderband anhaftendes Spülmedium und/oder Reinigungsmedium und gegebenenfalls noch anhaftenden Schmutz mittels des Trocknungsmediums bis zu einem seitlichen Rand des Förderbandes und über den seitlichen Rand hinaus von dem Förderband weg bewegen zu können, ist es ferner günstig, wenn die senkrechte Projektion mindestens einer Trocknungsmedium-Strahlachse auf eine Hauptfläche des Förderbandes gegenüber der Bandlaufrichtung in der Trocknungsvorrichtung geneigt ist.

Hierbei gilt das zur Hauptfläche des Förderbandes im Zusammenhang mit der Ausrichtung des Spülmedium-Strahls vorstehend bereits Gesagte entsprechend, wobei die durch den Spülmedium-Strahl beaufschlagte Oberfläche des Förderbandes durch die durch den Trocknungsmedium-Strahl beaufschlagte Oberfläche des Förderbandes zu ersetzen ist.

Wenn die Trocknungsmedium-Strahlachse senkrecht zu der Hauptfläche des Förderbandes ausgerichtet und die senkrechte Projektion der Trocknungsmedium-Strahlachse auf die Hauptfläche daher nur ein Punkt ist, wird statt der senkrechten Projektion der Trocknungsmedium-Strahlachse auf die Hauptfläche die senkrechte Projektion einer durch die Trocknungsmedium-Strahlachse verlaufenden Trocknungsmediumstrahl-Quermittelebene, längs welcher der Trocknungsmedium-Strahl seine kleinste Ausdehnung aufweist, auf die Hauptfläche des Förderbandes herangezogen.

Besonders günstig ist es, wenn die senkrechte Projektion mindestens einer Trocknungsmedium-Strahlachse auf eine Hauptfläche des Förderbandes gegenüber der Bandlaufrichtung in der Trocknungsvorrichtung um einen Winkel von mindestens ungefähr 1°, vorzugsweise um einen Winkel von mindestens ungefähr 5°, geneigt ist.

Ferner ist es von Vorteil, wenn die senkrechte Projektion mindestens einer Trocknungsmedium-Strahlachse auf eine Hauptfläche des Förderbandes gegenüber der Bandlaufrichtung in der Trocknungsvorrichtung um einen Winkel von höchstens ungefähr 40°, vorzugsweise um einen Winkel von höchstens ungefähr 30°, geneigt ist.

Besonders günstig zum Trocknen des Förderbandes mittels des Trocknungsmediums ist es, wenn die Strömungsrichtung mindestens eines Trocknungsmedium-Strahls eine Komponente aufweist, welche der Bandlaufrichtung in der Trocknungsvorrichtung entgegengesetzt ist.

Um zu erreichen, dass jeder Bereich des Förderbandes in einer wohl definierten Richtung mit dem Trocknungsmedium beaufschlagt wird, ist es dann, wenn die Trocknungsvorrichtung mehrere Trocknungsmedium-Düsen umfasst, von Vorteil, wenn diese Trocknungsmedium-Düsen so gegeneinander versetzt angeordnet sind, dass die Trocknungsmedium-Strahlen verschiedener Trocknungsmedium-Düsen einander nicht überlappen.

Ferner ist es günstig, wenn mehrere Trocknungsmedium-Düsen längs einer schräg zur Bandlaufrichtung in der Trocknungsvorrichtung verlaufenden Geraden aufeinanderfolgen.

Wenn die Trocknungsvorrichtung mindestens zwei Trocknungsmedium-Düsen umfasst, welche einander entgegengesetzte Seiten des Förderbandes mit dem Trocknungsmedium beaufschlagen, so sind diese das Förderband von unterschiedlichen Seiten her mit dem Trocknungsmedium beaufschlagenden Trocknungsmedium-Düsen vorzugsweise in der Bandlaufrichtung gegeneinander versetzt angeordnet.

Wenn die Trocknungsvorrichtung mehrere Trocknungsmedium-Düsen umfasst, welche das Förderband von einer ersten Seite her mit dem Trocknungsmedium beaufschlagen und längs einer geradlinigen ersten Düsenlinie angeordnet sind, und die Trocknungsvorrichtung ferner mehrere Trocknungsmedium-Düsen umfasst, welche das Förderband von einer der ersten Seite entgegengesetzten zweiten Seite her mit dem Trocknungsmedium beaufschlagen und längs einer geradlinigen zweiten Düsenlinie angeordnet sind, so sind die erste Düsenlinie und die zweite Düsenlinie vorzugsweise längs der Bandlaufrichtung in der Trocknungsvorrichtung gegeneinander versetzt angeordnet.

Bei einer bevorzugten Ausgestaltung der Erfindung ist vorgesehen, dass die Trocknungsvorrichtung in einem separat von dem Reinigungsmodul und separat von dem Vorreinigungsmodul ausgebildeten Trocknungsmodul angeordnet ist.

Ein solches Trocknungsmodul umfasst vorzugsweise ein separat von den Modulgehäusen des Reinigungsmoduls und des Vorreinigungsmoduls ausgebildetes Modulgehäuse mit einer Eintrittsöffnung und einer Austrittsöffnung für das zu reinigende Förderband.

Um eine beidseitige Reinigung des Förderbandes (d.h. eine Reinigung der Innenseite und der Außenseite bzw. der Oberseite und der Unterseite des Förderbandes) zu ermöglichen und insbesondere auch von der Außenseite des Förderbandes zu dessen Innenseite verschleppten Schmutz entfernen zu können, ist es von Vorteil, wenn das Förderband mittels der Vorreinigungsvorrichtung beidseitig mit dem Reinigungsmedium und/oder mittels der Reinigungsvorrichtung beidseitig mit einem Spülmedium beaufschlagbar ist.

Insbesondere kann dabei vorgesehen sein, dass die Vorreinigungsvorrichtung auf jeder Seite des Förderbandes mindestens eine Reinigungsmedium-Düse und/oder die Reinigungsvorrichtung auf jeder Seite des Förderbandes mindestens eine Spülmedium-Düse umfasst.

Um Reinigungsmedium, Spülmedium und von dem Förderband gelösten Schmutz möglichst wirksam aus dem vom Förderband durchsetzten Bereich der Bandreinigungsvorrichtung zu entfernen, ist es günstig, wenn das Vorreinigungsmodul und/oder das Reinigungsmodul ein geschlossenes Modulgehäuse umfasst, in welchem Reinigungsmedium und/oder Spülmedium auffangbar und aus welchem Reinigungsmedium und/oder Spülmedium (gegebenenfalls zusammen mit vom Förderband gelöstem Schmutz) über einen Flüssigkeitsablauf abführbar ist.

Um von dem Förderband entferntes Reinigungsmedium, Spülmedium und Schmutz in einfacher Weise entsorgen oder einer Wiederaufbereitung zuführen zu können, ist bei einer bevorzugten Ausgestaltung der Erfindung vorgesehen, dass unter dem Vorreinigungsmodul und/oder unter dem Reinigungsmodul eine Auffangwanne zum Auffangen und Abführen von Reinigungsmedium und/oder von Spülmedium (gegebenenfalls mit darin enthaltenen Schmutzpartikeln) angeordnet ist.

Besonders günstig ist es, wenn die Bandreinigungsvorrichtung eine Auffangwanne umfasst, welche sich von einem Bereich unter dem Vorreinigungsmodul bis in einen Bereich unter dem Reinigungsmodul erstreckt. In diesem Fall können die Flüssigkeiten aus dem Vorreinigungsmodul und aus dem Reinigungsmodul in derselben Auffangwanne gesammelt und gemeinsam einer Entsorgung oder Wiederaufbereitung zugeführt werden.

Wenn die Bandreinigungsvorrichtung zusätzlich ein Trocknungsmodul umfasst, so erstreckt sich die Auffangwanne vorzugsweise auch in den Bereich unter dem Trocknungsmodul.

Die erfindungsgemäße Bandreinigungsvorrichtung eignet sich insbesondere zur Verwendung in einer Fördervorrichtung, insbesondere einer Fördervorrichtung zum Fördern von Speisen, Speisenbehältern und/oder Speisentabletts, welche ein umlaufendes Förderband und eine erfindungsgemäße Bandreinigungsvorrichtung umfasst.

Eine solche Fördervorrichtung kann insbesondere als ein Speisentransportband und/oder als ein Speisenportionierband ausgebildet sein.

Eine solche Fördervorrichtung umfasst vorzugsweise eine Steuerungsvorrichtung, mittels welcher die Bandlaufgeschwindigkeit des Förderbandes für einen Reinigungsvorgang gegenüber der Bandlaufgeschwindigkeit des Förderbandes in einer reinen Förderphase der Fördervorrichtung reduzierbar ist.

Insbesondere kann vorgesehen sein, dass die Bandlaufgeschwindigkeit mittels der Steuerungsvorrichtung auf höchstens ungefähr 3 m/min, vorzugsweise auf höchstens ungefähr 2 m/min, reduzierbar ist.

Durch die Reduzierung der Bandlaufgeschwindigkeit während der Reinigungsphase der Bandreinigungsvorrichtung wird erreicht, dass die Einwirkzeit des im Vorreinigungsmodul auf das Förderband aufgebrachten Reinigungsmediums auf den am Förderband haftenden Schmutz ausreichend lange ist, bevor das Reinigungsmedium zusammen mit dem gelösten Schmutz im Reinigungsmodul von dem Förderband entfernt wird.

In der reinen Förderphase der Fördervorrichtung, außerhalb der Reinigungsphase, beträgt die Bandlaufgeschwindigkeit des Förderbandes vorzugsweise mindestens ungefähr 3 m/min, insbesondere mindestens ungefähr 10 m/min.

Um einer Bedienungsperson anzuzeigen, dass sich die Fördervorrichtung und die Bandreinigungsvorrichtung in der Reinigungsphase befinden, ist es von Vorteil, wenn die Fördervorrichtung eine Signaleinrichtung zur Erzeugung eines optischen und/oder eines akustischen Signals, welches die Durchführung eines Reinigungsvorgangs mittels der Bandreinigungsvorrichtung anzeigt, umfasst.

Die Fördervorrichtung kann ferner einen auswechselbaren Behälter, der mit einem Reinigungszusatz befüllbar ist, umfassen, um aus einer Basisflüssigkeit, beispielsweise Wasser, und dem Reinigungszusatz das benötigte Reinigungsmedium zur Verwendung in der Vorreinigungsvorrichtung herzustellen.

Das Vorreinigungsmodul, das Reinigungsmodul und gegebenenfalls das Trocknungsmodul sind vorzugsweise so in ein Gehäuse der Fördervorrichtung integriert, dass sie von außen im Wesentlichen nicht sichtbar sind.

Die Düsenachsen der Reinigungsmedium-Düsen der Vorreinigungsvorrichtung sind vorzugsweise senkrecht zur Bandlaufrichtung und im Wesentlichen parallel zur lokalen Oberflächennormale des Förderbandes ausgerichtet.

Die Düsenachsen der Spülmedium-Düsen der Reinigungsvorrichtung sind hingegen vorzugsweise schräg zur lokalen Bandförderrichtung angeordnet. Hierdurch wird Schmutz direkt über einen seitlichen Rand des Förderbandes vom Förderband weg transportiert.

Die erfindungsgemäße Bandreinigungsvorrichtung benötigt weder eine Saugvorrichtung noch eine mechanische Abstreichvorrichtung.

Die Bandreinigungsvorrichtung kann eine von dem Vorreinigungsmodul und von dem Reinigungsmodul separat ausgebildete Versorgungseinheit in einem separaten Versorgungseinheitsgehäuse umfassen.

Diese Versorgungseinheit kann mindestens eine Dosiereinrichtung, mindestens ein Ventil und/oder Raum für mindestens einen Reinigungszusatzbehälter umfassen.

Die Bandreinigungsvorrichtung weist vorzugsweise eine speicherprogrammierbare Steuerung (SPS) zur Steuerung des Reinigungsablaufs auf.

Die Bandreinigungsvorrichtung kann ein Betätigungselement, beispielsweise einen Tastschalter, zum Starten des Reinigungsprozesses aufweisen.

Ferner kann die Bandreinigungsvorrichtung ein Anzeigeelement zur optischen und/oder akustischen Anzeige des Reinigungsbetriebs aufweisen.

Ein Förderbetrieb und ein Reinigungsbetrieb einer Fördervorrichtung mit der erfindungsgemäßen Bandreinigungsvorrichtung sind gleichzeitig möglich.

Insbesondere können an der Fördervorrichtung ein Speisenportioniervorgang und ein Reinigungsvorgang gleichzeitig durchgeführt werden.

Das Vorreinigungsmodul, das Reinigungsmodul und gegebenenfalls das Trocknungsmodul der Bandreinigungsvorrichtung können je nach Anforderung frei an der Fördervorrichtung angeordnet, miteinander kombiniert und/oder ausgetauscht werden.

Die Eintrittsöffnung und/oder die Austrittsöffnung mindestens eines Modulgehäuses bildet vorzugsweise zusammen mit dem die Eintrittsöffnung bzw. die Austrittsöffnung durchsetzenden Förderband ein Labyrinth, welches verhindert, dass Flüssigkeit aus dem Modulgehäuse in die Umgebung des Moduls, insbesondere in den Innenraum eines Gehäuses der Fördervorrichtung, austritt.

Mindestens ein Modulgehäuse ist vorzugsweise so abgedichtet, dass Flüssigkeit nur durch mindestens ein Ablaufloch am Boden des Modulgehäuses ablaufen kann.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische, teilweise geschnittene Seitenansicht einer Bandfördervorrichtung mit einem umlaufenden Förderband und einer Bandreinigungsvorrichtung, welche ein Vorreinigungsmodul, ein Reinigungsmodul und ein Trocknungsmodul umfasst;
- Fig. 2: ein schematisches Blockschaltbild der Bandreinigungsvorrichtung aus Fig. 1;
- Fig. 3: eine schematische perspektivische Darstellung des Vorreinigungsmoduls der Bandreinigungsvorrichtung;
- Fig. 4: eine schematische Draufsicht von oben auf das Vorreinigungsmodul;
- Fig. 5: eine schematische Draufsicht auf eine Bandeintrittsseite des Vorreinigungsmoduls, mit der Blickrichtung in Richtung des Pfeiles 5 in Fig. 4;
- Fig. 6: eine schematische Vorderansicht des Vorreinigungsmoduls, mit der Blickrichtung in Richtung des Pfeiles 6 in Fig. 4;
- Fig. 7: einen schematischen vertikalen Querschnitt durch das Vorreinigungsmodul längs der Bandlaufrichtung;
- Fig. 8: eine schematische Seitenansicht einer Düsenanordnung in dem Vorreinigungsmodul, längs der Bandlaufrichtung gesehen;
- Fig. 9: eine schematische vertikale Draufsicht auf die Düsenanordnung in dem Vorreinigungsmodul aus Fig. 8, mit der Blickrichtung in Richtung des Pfeiles 9 in Fig. 8;
- Fig. 10: eine schematische Ansicht der Düsenanordnung aus Fig. 8 senkrecht zur Bandlaufrichtung, mit der Blickrichtung in Richtung des Pfeiles 10 in Fig. 8;
- Fig. 11: einen schematischen vertikalen Schnitt durch eine Rückwand des Vorreinigungsmoduls, mit einer die Rückwand abdichtenden Dichtungsanordnung;
- Fig. 12: eine schematische perspektivische Darstellung des Reinigungsmoduls der Bandreinigungsvorrichtung;
- Fig. 13: eine schematische Draufsicht von oben auf das Reinigungsmodul;
- Fig. 14: eine schematische Draufsicht auf eine Bandeintrittsseite des Reinigungsmoduls aus Fig. 13, mit der Blickrichtung in Richtung des Pfeiles 14 in Fig. 13;
- Fig. 15: eine schematische Vorderansicht des Reinigungsmoduls, mit der Blickrichtung in Richtung des Pfeiles 15 in Fig. 13;
- Fig. 16: einen schematischen vertikalen Querschnitt durch das Reinigungsmodul längs der Bandlaufrichtung;
- Fig. 17: eine schematische Seitenansicht einer Düsenanordnung in dem Reinigungsmodul, in der Bandlaufrichtung gesehen;
- Fig. 18: eine schematische vertikale Draufsicht auf die Düsenanordnung in dem Reinigungsmodul aus Fig. 17, mit der Blickrichtung in Richtung des Pfeiles 18 in Fig. 17;
- Fig. 19: eine schematische Ansicht der Düsenanordnung aus Fig. 17 senkrecht zur Bandlaufrichtung, mit der Blickrichtung in Richtung des Pfeiles 19 in Fig. 17;
- Fig. 20: eine schematische perspektivische Darstellung des Trocknungsmoduls der Bandreinigungsvorrichtung;
- Fig. 21: eine schematische Draufsicht von oben auf das Trocknungsmodul aus Fig. 20;
- Fig. 22: eine schematische Draufsicht auf eine Eintrittsseite des Trocknungsmoduls aus Fig. 21, mit der Blickrichtung in Richtung des Pfeiles 22 in Fig. 21;
- Fig. 23: eine schematische Vorderansicht des Trocknungsmoduls aus Fig. 21, mit der Blickrichtung in Richtung des Pfeiles 23 in Fig. 21;
- Fig. 24: einen schematischen vertikalen Querschnitt durch das Trocknungsmodul längs der Bandlaufrichtung;
- Fig. 25: eine schematische Seitenansicht einer Düsenanordnung in dem Trocknungsmodul, längs der Bandlaufrichtung gesehen;
- Fig. 26: eine vertikale Draufsicht auf die Düsenanordnung aus Fig. 25, mit der Blickrichtung in Richtung des Pfeiles 26 in Fig. 25;
- Fig. 27: eine schematische Draufsicht auf die Düsenanordnung aus Fig. 25 senkrecht zur Bandlaufrichtung, mit der Blickrichtung in Richtung des Pfeiles 27 in Fig. 25;
- Fig. 28: eine schematische Draufsicht von oben auf eine Auffangwanne der Bandreinigungsvorrichtung;
- Fig. 29: einen schematischen Querschnitt durch die Auffangwanne aus Fig. 28, senkrecht zur Bandlaufrichtung genommen;
- Fig. 30: eine vergrößerte Darstellung des Bereichs I aus Fig. 29;
- Fig. 31: eine schematische perspektivische Darstellung der Bandfördervorrichtung mit einem umlaufenden Förderband, einer Bandreinigungsvorrichtung und einer Auffangwanne aus Fig. 1;
- Fig. 32: eine schematische Draufsicht von oben auf die Bandfördervorrichtung aus Fig. 31;
- Fig. 33: einen schematischen vertikalen Längsschnitt durch einen oberen Teil der Bandfördervorrichtung mit Bandreinigungsvorrichtung aus den Fig. 31 und 32, längs der Linie 33-33 in Fig. 32; und
- Fig. 34: einen schematischen horizontalen Längsschnitt durch die Bandfördervorrichtung mit einer Bandreinigungsvorrichtung, welche ein Vorreinigungsmodul, ein Reinigungsmodul und ein Trocknungsmodul umfasst, längs der Linie 34-34 in Fig. 33.

Gleiche oder funktional äquivalente Elemente sind in allen Figuren mit denselben Bezugszeichen bezeichnet.

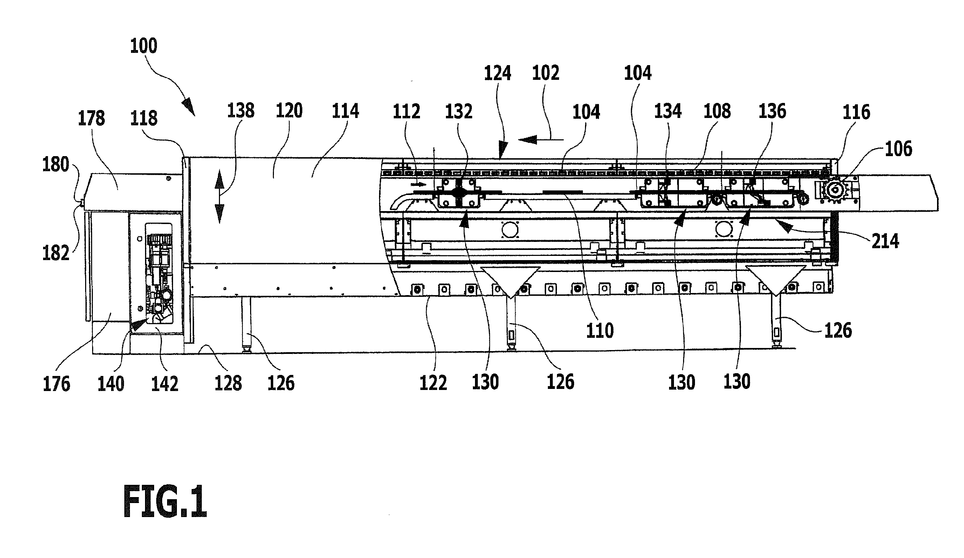

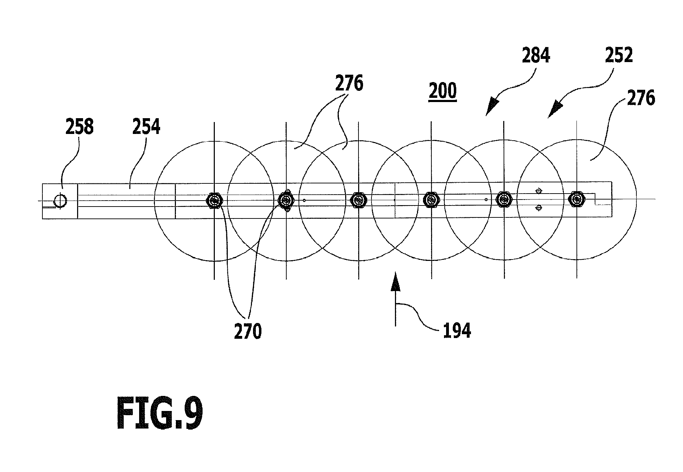

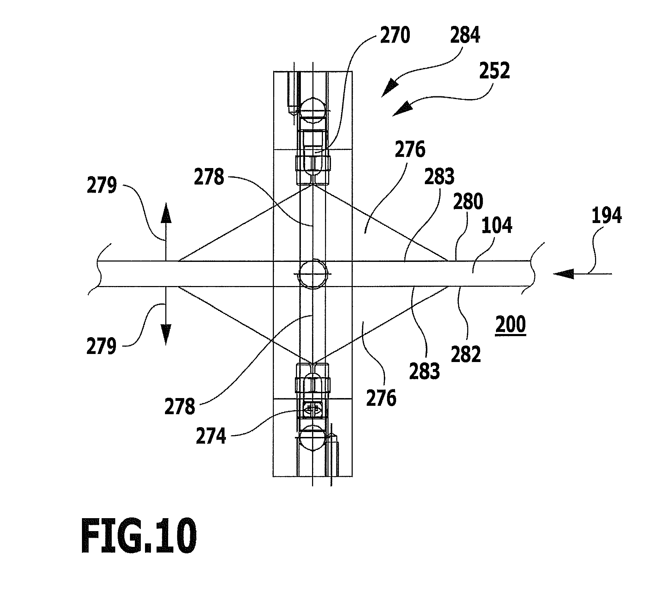

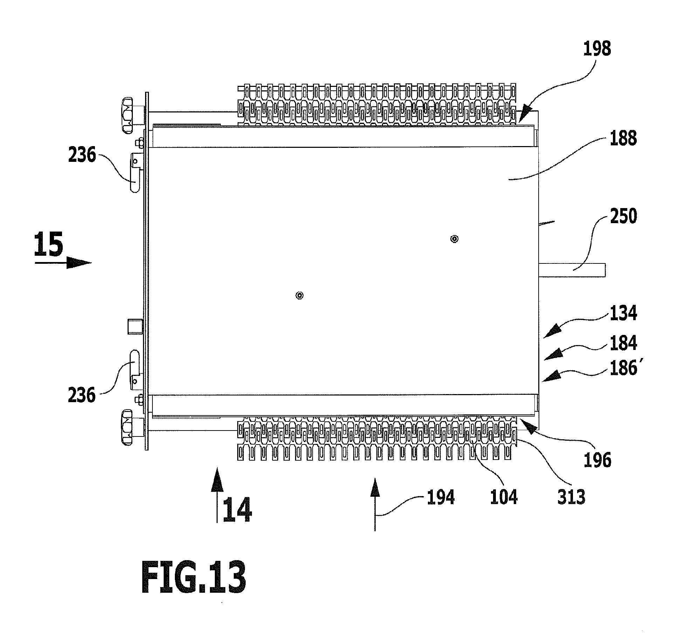

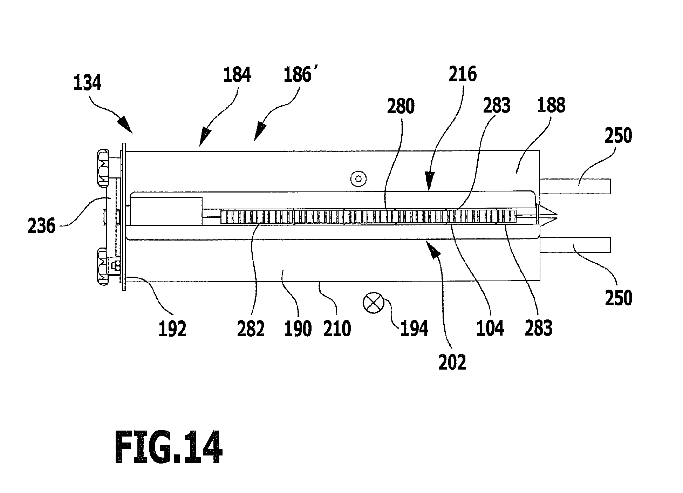

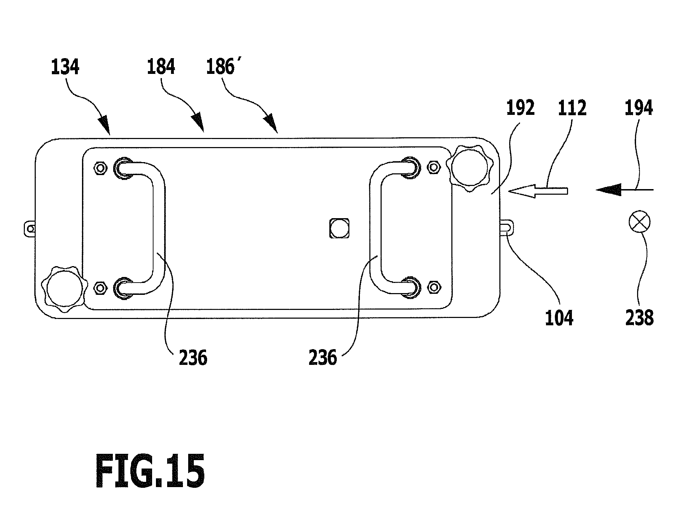

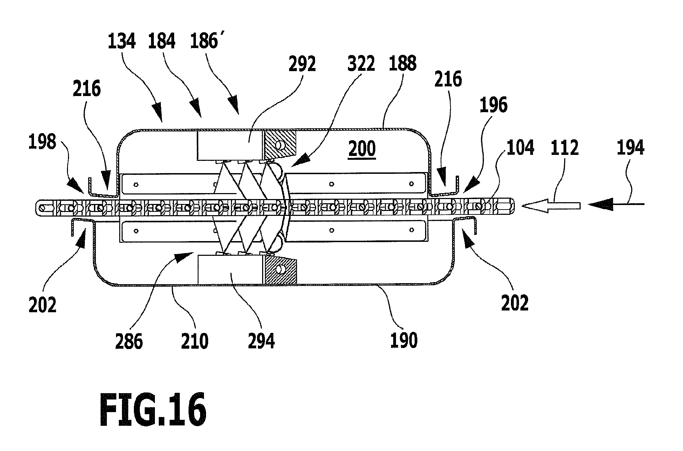

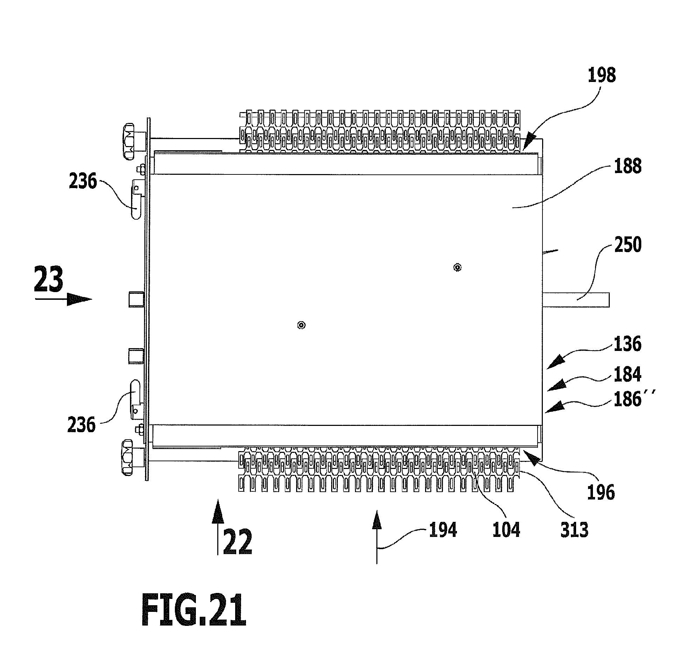

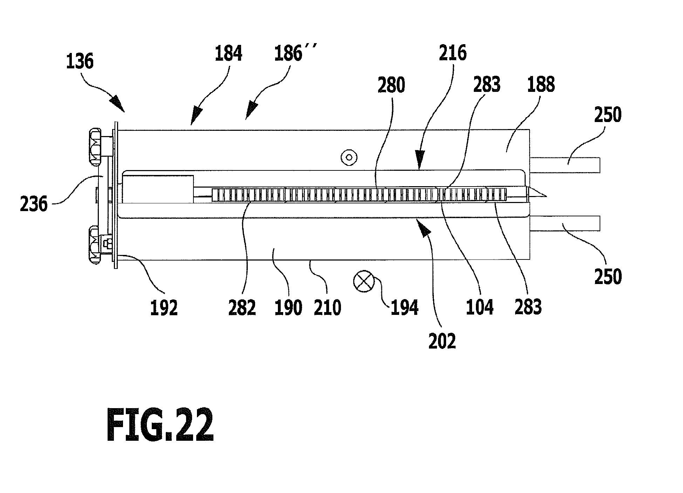

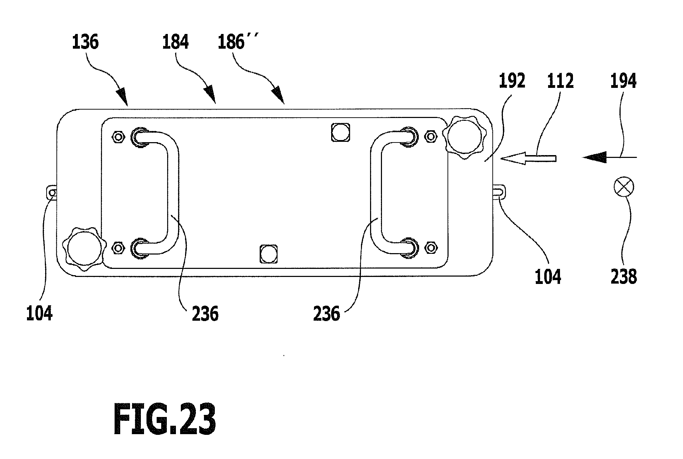

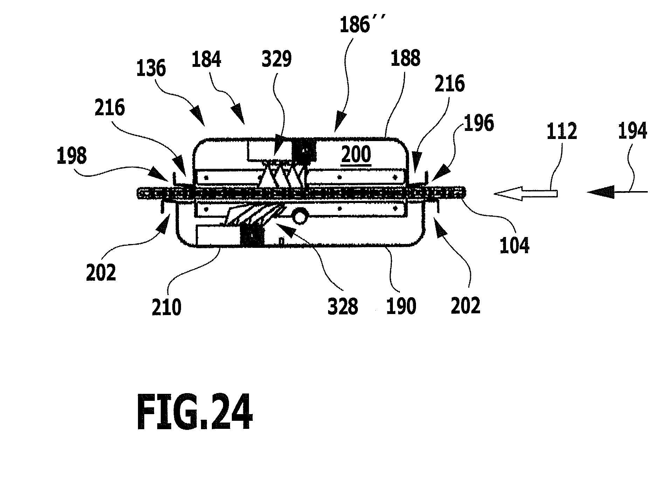

Eine in den Fig. 1 bis 30 dargestellte, als Ganzes mit 100 bezeichnete Fördervorrichtung, insbesondere zum Fördern von Speisen, Speisenbehältern und/oder Speisentabletts, welche Speisenbehälter tragen, längs einer Förderrichtung 102 ist als eine Bandfördervorrichtung ausgebildet und umfasst ein Förderband 104, das bei der hier dargestellten Ausführungsform als ein Kettenband ausgebildet ist, aber auch in anderer Weise, beispielsweise als ein Rundriemenband oder ein Gurtband, ausgebildet sein kann.

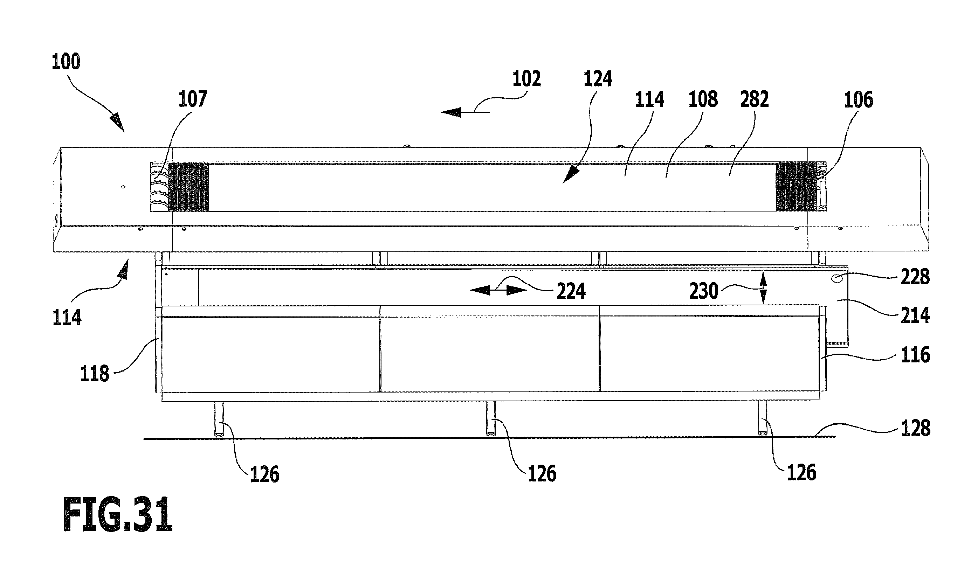

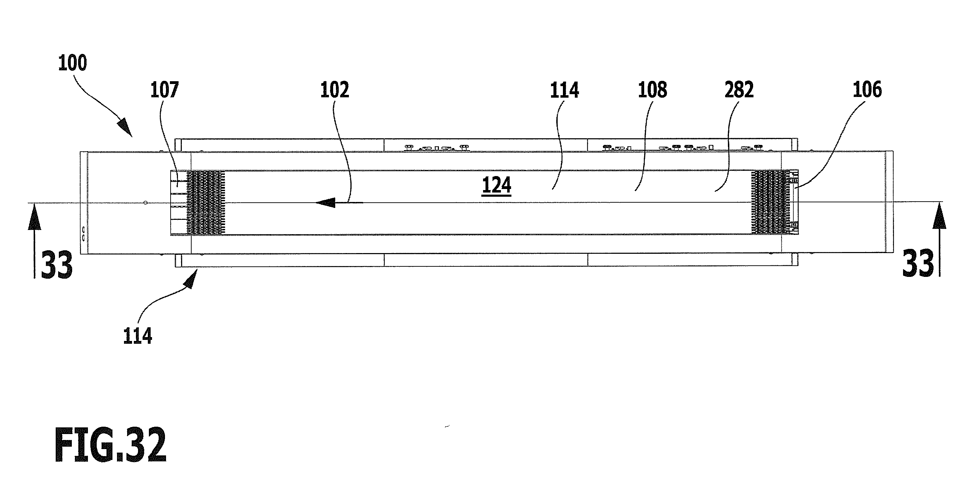

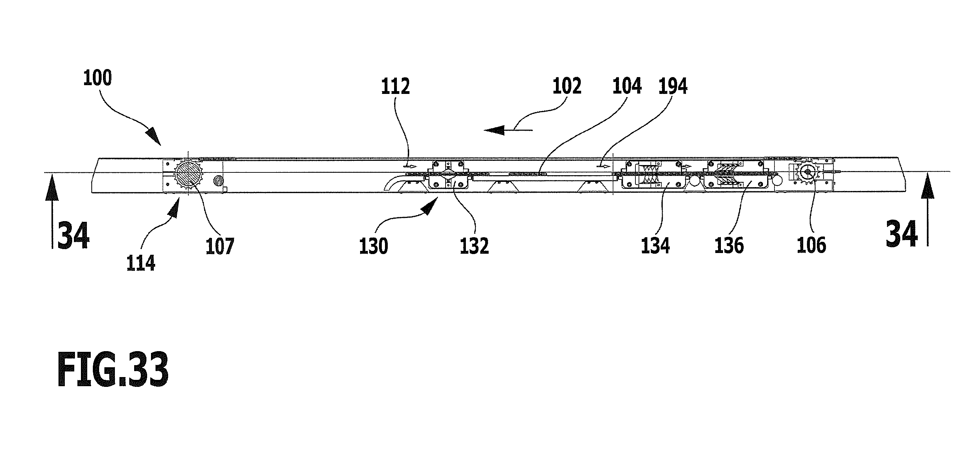

Das Förderband 104 ist ringförmig geschlossen ausgebildet und an beiden Enden der Fördervorrichtung 100 jeweils um eine Umlenkrolle 106 bzw. 107 gelegt, von denen mindestens eine durch eine (nicht dargestellte) Antriebsvorrichtung zu einer Drehbewegung antreibbar ist (siehe insbesondere die Fig. 31 bis 33).

Der oberhalb der Umlenkrollen 106, 107 liegende Teil des Förderbandes 104 bildet ein Obertrum 108 des Förderbandes 104, und der unterhalb des Obertrums 108 zwischen den Umlenkrollen 106, 107 liegende Teil des Förderbandes 104 bildet ein Untertrum 110 des Förderbandes 104.

Wenn das Förderband 104 zu seiner Umlaufbewegung angetrieben wird, so bewegt sich das Obertrum 108 des Förderbandes 104 in der Förderrichtung 102 (in Fig. 1 von rechts nach links), während sich das Untertrum 110 des Förderbandes 104 in der entgegengesetzt zur Förderrichtung 102 gerichteten Rücklaufrichtung 112 (in Fig. 1 von links nach rechts) bewegt.

Das Förderband 104 und seine Antriebsvorrichtung sind in einem Gehäuse 114 angeordnet, welches das Förderband 104 von vorne durch eine Vorderwand 116, von hinten durch eine Rückwand 118, zu beiden Seiten durch parallel zur Förderrichtung 102 verlaufende Seitenwände 120 und nach unten hin durch eine Bodenwand 122 umschließt, nach oben hin aber durch eine obere Durchtrittsöffnung 124 geöffnet ist, damit Speisen, Speisenbehälter und/oder Speisentabletts von außerhalb des Gehäuses 114 auf das Obertrum 108 des Förderbandes 104 aufgelegt bzw. vom Obertrum 108 des Förderbandes 104 abgenommen werden können.

Die Fördervorrichtung 100 kann eine im Gehäuse 114 angeordnete (nicht dargestellte) Kühlvorrichtung umfassen, mittels welcher ein Luftvorhang aus Kühlluft erzeugbar ist, der in im Wesentlichen horizontaler Richtung zwischen dem Obertrum 108 des Förderbandes 104 und der oberen Durchtrittsöffnung 124 des Gehäuses 114 verläuft, um das Förderband 104 von der umgebenden Atmosphäre zu isolieren und auf einer für die Kühlung der Speisen erforderlichen niedrigen Temperatur zu halten.

Das Gehäuse 114 stützt sich mit mehreren Stützen 126 an einem Untergrund 128 ab.

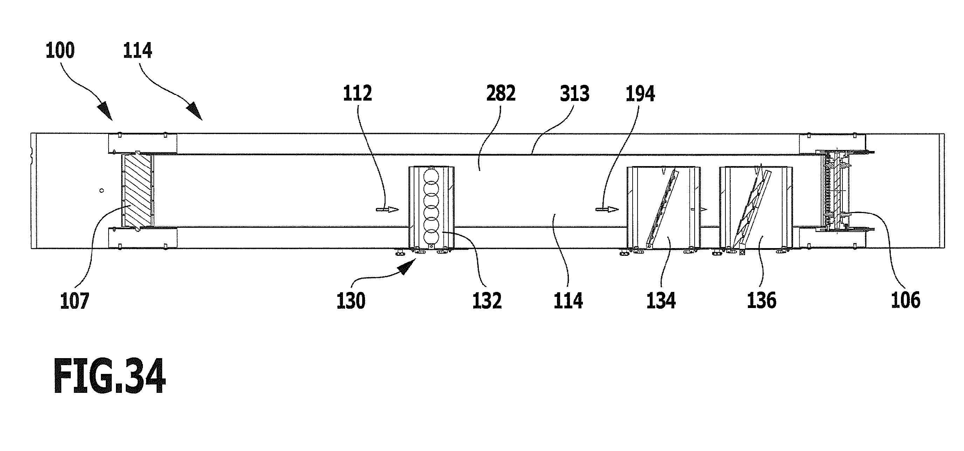

Um das Förderband 104, welches im Betrieb zwangsläufig durch Speisen oder andere Verunreinigungen verschmutzt wird, zu reinigen, ist die Fördervorrichtung 100 mit einer als Ganzes mit 130 bezeichneten Bandreinigungsvorrichtung versehen, welche modular aufgebaut ist und bei der hier dargestellten Ausführungsform ein Vorreinigungsmodul 132, ein Reinigungsmodul 134 und ein Trocknungsmodul 136 umfasst (siehe insbesondere die Fig. 1 und 34).

Das Vorreinigungsmodul 132, das Reinigungsmodul 134 und das Trocknungsmodul 136 folgen in dieser Reihenfolge in der Rücklaufrichtung 112 des Förderbandes 104 aufeinander.

Diese Module sind unterhalb des Obertrums 108 des Förderbandes 104 angeordnet und werden jeweils von dem Untertrum 110 des Förderbandes 104 durchlaufen.

Auf diese Weise ist es grundsätzlich möglich, einen Reinigungsvorgang mittels der Bandreinigungsvorrichtung 130 am Untertrum 110 des Förderbandes 104 auszuführen, während das Obertrum 108 des Förderbandes 104 gleichzeitig zum Fördern des Fördergutes in der Förderrichtung 102 benutzt wird.

Vorzugsweise erfolgt die Reinigung des Förderbandes 104 jedoch nicht während der normalen Betriebsphase oder Förderphase der Fördervorrichtung 100, sondern in einer speziellen Reinigungsphase, wobei vorzugsweise die Bandlaufgeschwindigkeit des Förderbandes 104 für die Reinigungsphase gegenüber der Bandlaufgeschwindigkeit des Förderbandes 104 während der normalen Förderphase reduziert wird.

Beispielsweise kann die Bandlaufgeschwindigkeit in der Förderphase von ungefähr 2,5 m/min bis ungefähr 18 m/min betragen, während die Bandlaufgeschwindigkeit in der Reinigungsphase vorzugsweise ungefähr 2,5 m/min oder weniger, beispielsweise ungefähr 1 m/min, beträgt.

Während der Reinigungsphase wird im Vorreinigungsmodul 132 ein flüssiges Reinigungsmedium, beispielsweise Wasser und/oder eine Reinigungslösung, sowohl von unten als auch von oben auf das durch das Vorreinigungsmodul 132 hindurch laufende Förderband 104 aufgesprüht.

Hierdurch wird das zu reinigende Förderband 104 gleichmäßig mit dem Reinigungsmedium benetzt.

Während das benetzte Förderband 104 von dem Vorreinigungsmodul 132 mit der reduzierten Bandlaufgeschwindigkeit während der Reinigungsphase vergleichsweise langsam zu dem Reinigungsmodul 134 bewegt wird, kann das Reinigungsmedium auf das Förderband 104 einwirken, was den Reinigungseffekt verstärkt.

In dem auf das Vorreinigungsmodul 132 folgenden Reinigungsmodul 134 wird ein flüssiges Spülmedium, beispielsweise klares Wasser, von oben und von unten auf das Förderband 104 aufgesprüht, und zwar, wie nachstehend noch näher erläutert werden wird, mittels Sprühdüsen, deren Düsenachsen schräg zur Vertikalen 138 und schräg zur Rücklaufrichtung 112 ausgerichtet sind, so dass sich von dem Förderband 104 lösende Schmutzreste infolge der schrägen Ausrichtung der Sprühdüsen und der damit erzeugten Flüssigkeitsstrahlen über einen seitlichen Rand des Förderbandes 104 hinweg zur Seite weggesprüht werden.

In dem auf das Reinigungsmodul 134 folgenden Trocknungsmodul 136 wird das Förderband 104, von welchem das Reinigungsmedium durch die Spülung im Reinigungsmodul 134 weitgehend entfernt worden ist, mittels eines gasförmigen Trocknungsmediums, beispielsweise Druckluft, getrocknet, das mittels Blasdüsen von oben und von unten gegen das Förderband 104 geblasen wird.

Der Versorgung des Vorreinigungsmoduls 132, des Reinigungsmoduls 134 und des Trocknungsmoduls 136 mit den jeweils benötigten Medien dient eine Versorgungseinheit 140, die beispielsweise hinter der Rückwand 118 der Fördervorrichtung 100 in einem separaten Versorgungseinheitsgehäuse 142 angeordnet ist.

In der Darstellung von Fig. 1 ist von dem Versorgungseinheitsgehäuse 142 ein (nicht dargestellter) Gehäusedeckel abgenommen worden, so dass Teile des Innenraums des Versorgungseinheitsgehäuses 142 mit der darin angeordneten Versorgungseinheit 140 sichtbar sind.

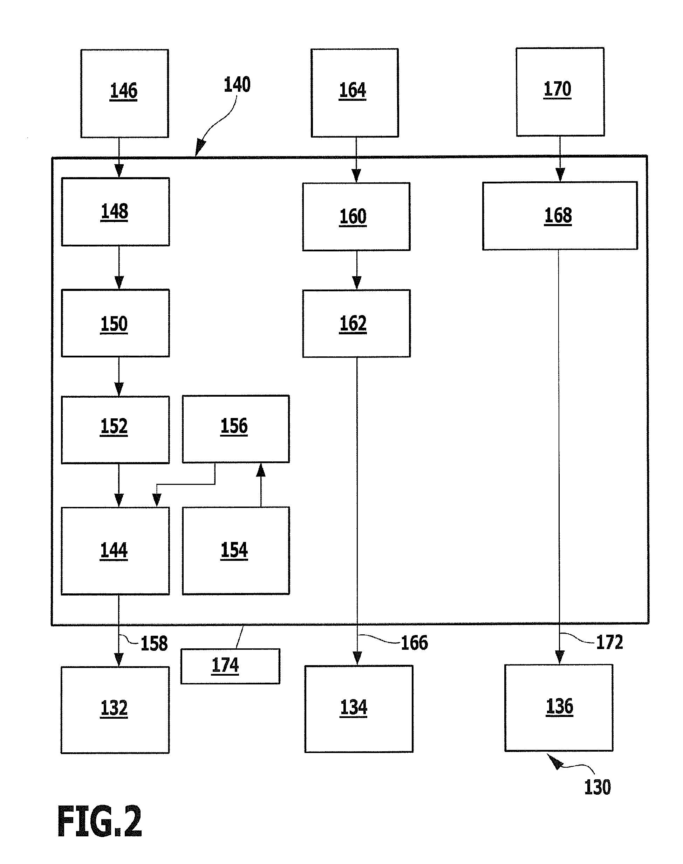

Die wesentlichen Bestandteile der Versorgungseinheit 140 sind aus der Blockdarstellung von Fig. 2 zu ersehen.

Zur Versorgung des Vorreinigungsmoduls 132 mit dem benötigten Reinigungsmedium umfasst die Versorgungseinheit 140 eine Zumischpumpe 144, welche das Reinigungsmedium aus warmem Wasser mit einer Temperatur von beispielsweise höchstens 40°C und einem Reinigungszusatz mischt.

Der Anteil des Reinigungszusatzes an dem Reinigungsmedium beträgt beispielsweise von ungefähr 0,2 Gewichtsprozent bis ungefähr 2,0 Gewichtsprozent.

Das warme Wasser wird der Zumischpumpe 144 von einem externen Warmwasseranschluss 146 über einen Systemtrenner 148, einen Druckminderer 150 und ein Magnetventil 152 zugeführt.

Der Systemtrenner 148 umfasst ein Rückschlagventil, um zu verhindern, dass mit Reinigungszusatz vermischtes Wasser zu dem externen Warmwasseranschluss 146 zurück gelangt.

Der Reinigungszusatz wird der Zumischpumpe 144 aus einem Reinigungszusatzbehälter 154 über eine Sauglanze 156 zugeführt.

Der Reinigungszusatzbehälter 154 kann beispielsweise als ein Kanister ausgebildet sein, welcher nach Entleerung aus der Versorgungseinheit 140 entnehmbar und gegen einen gefüllten Kanister austauschbar ist.

Das in der Zumischpumpe 144 durch Mischen des warmen Wassers mit dem Reinigungszusatz hergestellte Reinigungsmedium wird dem Vorreinigungsmodul 132 über eine Reinigungsmedium-Zuführleitung 158 zugeführt.

Zur Versorgung des Reinigungsmoduls 134 mit dem benötigten Spülmedium, insbesondere mit heißem Wasser, umfasst die Versorgungseinheit 140 einen Druckminderer 160 und ein Magnetventil 162, welche an einen externen Heißwasseranschluss 164 angeschlossen sind, der heißes Wasser mit einer Temperatur von beispielsweise mindestens ungefähr 60°C bereitstellt.

Von dem Magnetventil 162 führt eine Spülmedium-Zuführleitung 166 zu dem Reinigungsmodul 134, wobei die Spülmedium-Zufuhr zu dem Reinigungsmodul 134 mittels des Magnetventils 162 steuerbar ist.

Zur Versorgung des Trocknungsmoduls 136 mit dem erforderlichen Trocknungsmedium, beispielsweise mit Druckluft, umfasst die Versorgungseinheit 140 eine Druckluft-Steuereinheit 168, welche an eine externe Druckluftzufuhr 170 angeschlossen ist und einen Druckminderer sowie ein Magnetventil umfassen kann.

Von der Druckluft-Steuereinheit 168 führt eine Trocknungsmedium-Zuführleitung 168 zu dem Trocknungsmodul 136.

Zur Steuerung der Komponenten der Versorgungseinheit 140 dient eine Steuerungsvorrichtung 174, welche in einem Schaltschrank 176 neben der Versorgungseinheit 140 untergebracht ist.

Oberhalb des Schaltschranks 176 und der Versorgungseinheit 140 befindet sich eine Betätigungseinheit 178, die mit einem Betätigungselement 180 versehen ist, mittels welchem eine Reinigungsphase der Bandreinigungsvorrichtung 130 auslösbar ist.

Das Betätigungselement 180 kann beispielsweise als ein Tastschalter ausgebildet sein.

Nach Auslösung einer Reinigungsphase mittels des Betätigungselements 180 steuert die Steuervorrichtung 174, welche beispielsweise als eine speicherprogrammierbare Steuerung (SPS) ausgebildet sein kann, einen Reinigungsvorgang des Förderbandes 104.

Die Reinigungsphase der Bandreinigungsvorrichtung 130 dauert mindestens so lange an, bis die gesamte Länge des Förderbandes 104 mindestens einmal alle Module 132, 134 und 136 der Bandreinigungsvorrichtung 130 durchlaufen hat, so dass das gesamte Förderband 104 gereinigt worden ist.

Nach Ablauf der hierfür benötigten Reinigungszeit schaltet die Steuervorrichtung 174 die Fördervorrichtung 100 automatisch wieder in die Förderphase zurück, gegebenenfalls unter Erhöhung der Bandlaufgeschwindigkeit auf die erhöhte Bandlaufgeschwindigkeit während der Förderphase.

Um einer Bedienungsperson leicht kenntlich zu machen, dass sich die Fördervorrichtung 100 in der Reinigungsphase befindet, weist die Fördervorrichtung 100 ferner eine Signalvorrichtung auf, welche während der Reinigungsphase ein optisches und/oder ein akustisches Signal erzeugt, welches anzeigt, dass sich die Fördervorrichtung 100 und die Bandreinigungsvorrichtung 130 in der Reinigungsphase befinden.

Eine optische Anzeige des Reinigungsbetriebs kann beispielsweise dadurch erfolgen, dass das Betätigungselement 180 mit einer Leuchte versehen ist, welche während der Reinigungsphase von der Steuervorrichtung 174 in Betrieb genommen wird, um einer Bedienungsperson anzuzeigen, dass sich die Fördervorrichtung 100 und die Bandreinigungsvorrichtung 130 in der Reinigungsphase befinden.

Eine solche Leuchte kann insbesondere in den Tastknopf eines als Tastschalter ausgebildeten Betätigungselements 180 integriert sein.

In diesem Fall dient somit das Betätigungselement 180 zugleich als eine Signaleinrichtung 182.

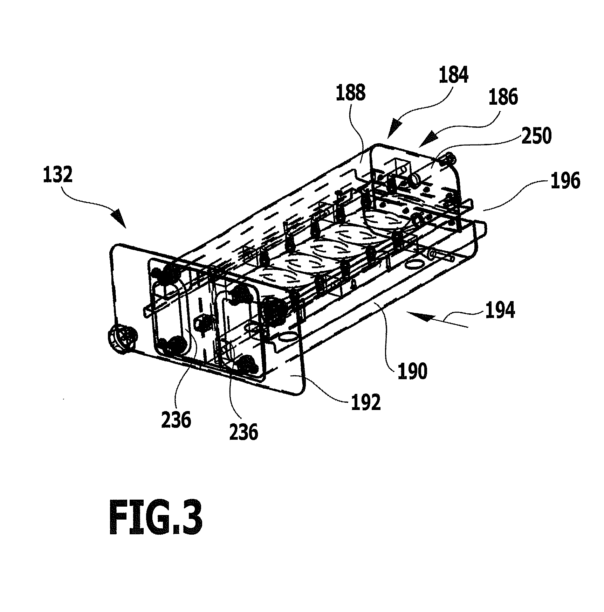

Der grundlegende Aufbau des Vorreinigungsmoduls 132, des Reinigungsmoduls 134 und des Trocknungsmoduls 136 ist derselbe und wird nachstehend exemplarisch am Beispiel des Vorreinigungsmoduls 132 unter Bezugnahme auf die Fig. 3 bis 11 beschrieben. Im Zuge dieser Beschreibung wird das Vorreinigungsmodul 132 auch einfach als Modul 184 bezeichnet.

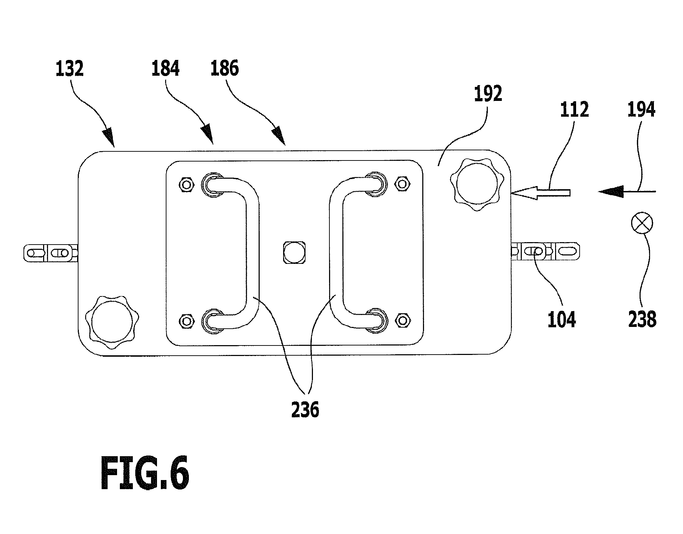

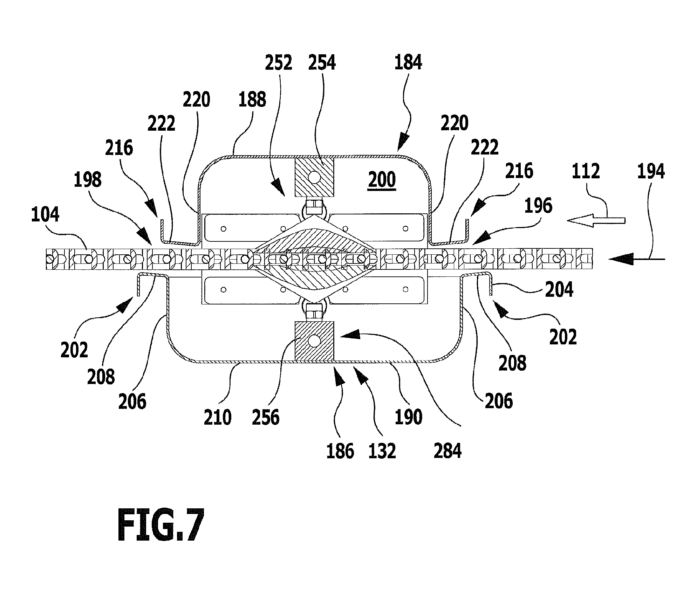

Wie insbesondere aus den Fig. 3 und 7 zu ersehen ist, umfasst das Modul 184 ein Modulgehäuse 186 aus einem Gehäuseoberteil 188, einem Gehäuseunterteil 190 und einer beide Gehäuseteile miteinander verbindenden Frontplatte 192 (siehe auch Fig. 6).

Wie am besten aus Fig. 7 zu ersehen ist, ist zwischen dem Gehäuseoberteil 188 und dem Gehäuseunterteil 190 ein in der Rücklaufrichtung 112, welche der lokalen Bandlaufrichtung 194 entspricht, vorne liegender, im Wesentlichen horizontal verlaufender, Eintrittsspalt 196 und ein in der Bandlaufrichtung 194 hinten liegender, ebenfalls im Wesentlichen horizontal verlaufender, Austrittsspalt 198 ausgebildet.

Das Förderband tritt durch den Eintrittsspalt 196 in das Modul 184 ein, bewegt sich durch den Innenraum 200 des Moduls 184 hindurch und verlässt das Modul 184 durch den Austrittsspalt 198.

Im Bereich des Eintrittsspalts 196 und des Austrittsspalts 198 ist das Gehäuseunterteil 190 mit jeweils einem abgekanteten Rand 202 versehen, welcher einen im Wesentlichen vertikal verlaufenden Endabschnitt 204 und einen den Endabschnitt 204 mit jeweils einer vertikalen Seitenwand 206 des Gehäuseunterteils 190 verbindenden Verbindungsabschnitt 208 umfasst.

Dabei ist die Oberseite des Verbindungsabschnitts 208 um einen kleinen Winkel von beispielsweise ungefähr 1° bis ungefähr 5° so gegen die Horizontale geneigt, dass der der vertikalen Seitenwand 206 zugewandte Innenrand des Verbindungsabschnitts 208 tiefer liegt als der dem Endabschnitt 204 zugewandte Außenrand des Verbindungsabschnitts 208.

Dadurch ist gewährleistet, dass von dem Förderband 104 oder aus dem Innenraum 200 auf den Verbindungsabschnitt 208 gelangende Flüssigkeit zu dem tiefer liegenden Innenrand des Verbindungsabschnitts 208 fließt und von dort über die vertikale Seitenwand 206 zur Bodenwand 210 des Gehäuseunterteils 190 gelangt.

In der Bodenwand 210 sind ein oder mehrere, beispielsweise vier, Ablauflöcher 212 vorgesehen, durch welche Flüssigkeit aus dem Modulgehäuse 186 in eine unterhalb aller drei Module 132, 134 und 136 angeordnete Auffangwanne 214 ablaufen kann.

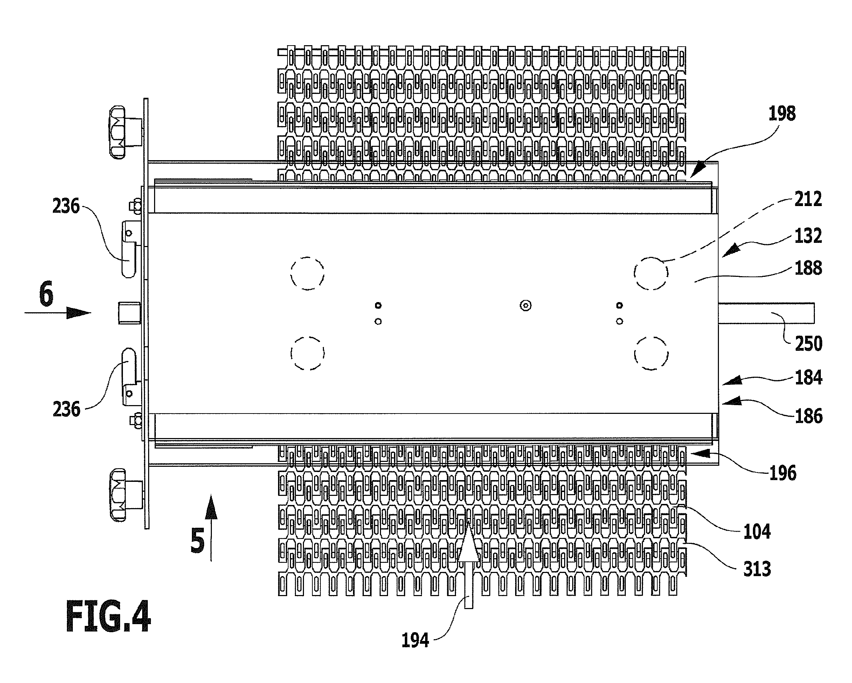

In Fig. 4 sind die Ablauflöcher 212 nur in gebrochenen Linien dargestellt, da Fig. 4 eine Draufsicht von oben auf das Vorreinigungsmodul 132 zeigt und somit die in der Bodenwand 210 des Gehäuseunterteils 190 angeordneten Ablauflöcher 212 in dieser Darstellung eigentlich nicht sichtbar sind.

Wie aus Fig. 7 ferner zu ersehen ist, weist auch das Gehäuseoberteil 188 des Moduls 184 im Bereich des Eintrittsspalts 196 und im Bereich des Austrittsspalts 198 jeweils einen doppelt abgekanteten Rand 216 auf, welcher einen im Wesentlichen vertikal ausgerichteten Endabschnitt 218 und einen den Endabschnitt 218 mit jeweils einer vertikalen Seitenwand 220 verbindenden Verbindungsabschnitt 222 aufweist.

Dabei ist die Unterseite des Verbindungsabschnitts 222 jeweils so gegenüber der Horizontalen um einen kleinen Winkel von beispielsweise ungefähr 1° bis ungefähr 5° geneigt, dass ein der jeweiligen vertikalen Seitenwand 220 zugewandter Innenrand des Verbindungsabschnitts 222 tiefer liegt als ein dem Endabschnitt 218 zugewandter Außenrand des Verbindungsabschnitts 222. Deshalb läuft von dem Förderband 104 oder aus dem Innenraum 200 zu dem Verbindungsabschnitt 222 gelangende Flüssigkeit längs des geneigten Verbindungsabschnitts 222 zu dessen tiefer liegendem Innenrand und tropft von dort nach unten in das Gehäuseunterteil 190 ab.

Von der Bodenwand 210 des Gehäuseunterteils 190 gelangt diese Flüssigkeit dann durch die Ablauflöcher 212 in die Auffangwanne 214.

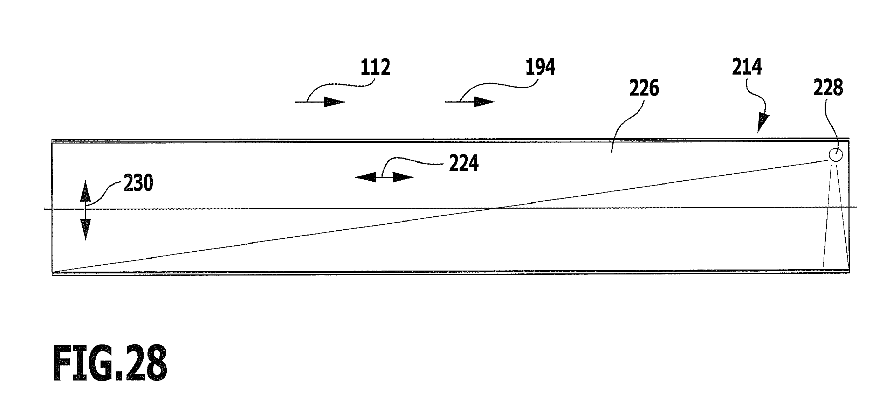

Die Auffangwanne 214 ist in den Fig. 28 bis 30 im Einzelnen dargestellt.

Die Auffangwanne 214 erstreckt sich in ihrer parallel zur Rücklaufrichtung 112 und zur lokalen Bandlaufrichtung 194 verlaufenden Längsrichtung 224 unter allen drei Modulen 132, 134 und 136 hinweg bis zu einem vorderen Ende der Fördervorrichtung 100, an welchem eine Bodenwand 226 der Auffangwanne 214 mit einer Abflussöffnung 228 versehen ist, die einen großen Durchmesser von beispielsweise ungefähr 2 Zoll aufweist.

Die Bodenwand 226 ist so geneigt, dass die durch die Ablauflöcher 212 der Module 184 in die Auffangwanne 214 gelangende Flüssigkeit zu der Abflussöffnung 228 hin strömt.

In ihrer senkrecht zur Längsrichtung 224 und im Wesentlichen horizontal verlaufenden Querrichtung 230 weist die Auffangwanne 214 eine deutlich kleinere Ausdehnung auf als in der Längsrichtung 224.

Die Ausdehnung der Auffangwanne 214 in der Querrichtung 230 entspricht im Wesentlichen der Ausdehnung der Module 184 in derselben Richtung.

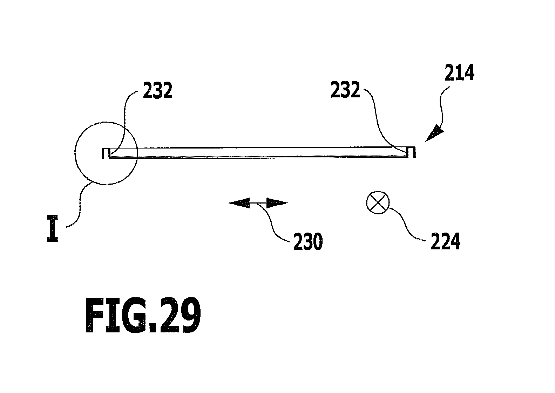

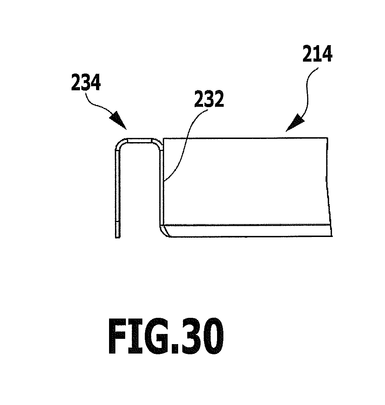

Wie aus den Fig. 29 und 30 zu ersehen ist, ist die Auffangwanne 214 an ihren parallel zur Längsrichtung 224 verlaufenden Längsseiten 232 mit jeweils einem Einhängerand 234 versehen, der einen Querschnitt in Form eines nach unten offenen U aufweist, so dass die Auffangwanne 214 mit jedem der Einhängeränder 234 an einer hierzu komplementären (nicht dargestellten) Einhängeschiene einhängbar ist.

Längs der Einhängeschienen kann die Auffangwanne 214 in ihrer Längsrichtung 224 aus dem Gehäuse 114 der Fördervorrichtung 100 herausgezogen werden, um die Auffangwanne 214 komplett aus dem Gehäuse 114 für Reinigungszwecke entnehmen und im entnommenen Zustand reinigen zu können.

Das Vorreinigungsmodul 132 oder Modul 184, dessen Beschreibung nunmehr unter Bezugnahme auf die Fig. 6 fortgesetzt wird, ist an seiner Frontplatte mit einem oder mehreren, beispielsweise zwei, Griffen 236 versehen, an denen das Modul 184 von einer Bedienungsperson aus seiner Arbeitsposition in dem Gehäuse 114 der Fördervorrichtung 100 in einer zur Bandlaufrichtung 194 senkrechten Richtung herausgezogen werden kann.

Der Griff 236 bzw. die Griffe 236 sind vorzugsweise klappbar ausgebildet, so dass die Griffe 236, wenn sie nicht benötigt werden, so umklappbar sind, dass sie an der Frontplatte 192 anliegen. Dadurch kann die Ausdehnung des Moduls 184 in der zur Bandlaufrichtung 194 senkrecht und im Wesentlichen horizontal verlaufenden Querrichtung 238 des Förderbandes 104 in der Arbeitsposition des Moduls 184 möglichst klein gehalten werden.

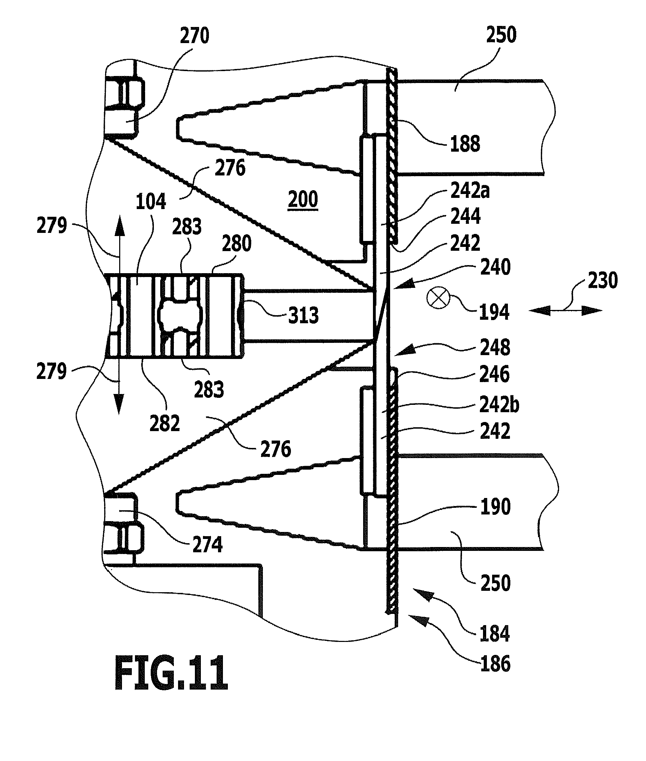

Um das Modul 184 aus der Arbeitsposition entnehmen zu können, ohne zuvor das Förderband 104 aus dem Modul 184 entfernen zu müssen, ist auch an der Rückseite des Moduls 184 zwischen dem Gehäuseoberteil 188 und dem Gehäuseunterteil 190 ein Spalt 240 auf der Höhe des Förderbandes 104 ausgebildet (siehe Fig. 11).

Im Betriebszustand des Moduls 184 wird der Spalt 240 mittels zweier Dichtelemente 242 verschlossen, welche beide als ungefähr rechteckige Dichtungsleisten ausgebildet sind und sich im Wesentlichen parallel zur Bandlaufrichtung 194 erstrecken.

Ein oberes Dichtelement 242a ist an der Innenseite des Gehäuseoberteils 188 befestigt und erstreckt sich über den unteren Rand 244 des Gehäuseoberteils 188 hinaus nach unten, während ein unteres Dichtelement 242b an der Innenseite des Gehäuseunterteils 190 befestigt ist und sich nach oben über den oberen Rand 246 des Gehäuseunterteils 190 hinaus nach oben erstreckt.

Im Bereich des Spaltes 240 überlappen sich das obere Dichtelement 242a und das untere Dichtelement 242b derart, dass keine Flüssigkeit aus dem Innenraum 200 des Moduls 184 nach außen gelangt.

Die Dichtelemente 242 sind vorzugsweise aus einem elastischen Elastomermaterial ausgebildet, so dass sie durch elastische Rückstellkräfte gegeneinander vorgespannt sind und die aus den Dichtelementen 242 gebildete Dichtung 248 im Ruhezustand im Wesentlichen fluiddicht geschlossen bleibt.

Wenn aber das Modul 184 in der Querrichtung 230 aus seiner Arbeitsposition herausgezogen wird, während das Förderband 104 in seiner Ausgangslage verbleibt, gelangt das Förderband 104 unter Aufbiegung der Dichtelemente 242 nach außen durch den Spalt 240 und die dann geöffnete Dichtung 248 hindurch in den Außenraum des Moduls 184.

Beim Wiedereinsetzen des Moduls 184 in seine Arbeitsposition gelangt das Förderband 104 in umgekehrter Richtung durch die dann in den Innenraum 200 des Moduls 184 umgebogenen Dichtelemente 242 und den Spalt 240 hindurch in den Innenraum 200 des Moduls 184 zurück.

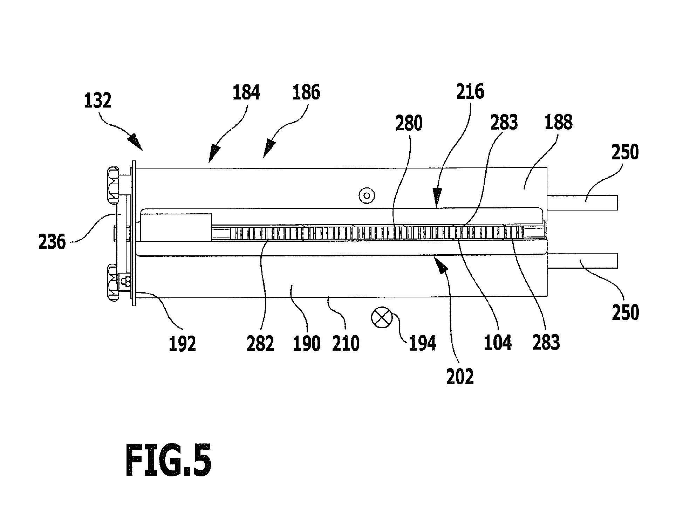

Um das Modul 184 beim Wiedereinsetzen in die Arbeitsposition in einfacher Weise präzise positionieren zu können, ist das Modul 184 an seiner Rückseite mit einem oder mehreren Zentrierelementen 250, beispielsweise in Form von Zentrierzapfen, versehen (siehe Fig. 5).

Beim Einsetzen des Moduls 184 in seine Arbeitsposition gelangen die Zentrierelemente 250 in Eingriff mit jeweils einer hierzu komplementären Zentrierelementaufnahme im Gehäuse 114 der Fördervorrichtung 100.

Um das Förderband 104 in dem Vorreinigungsmodul 132 mit dem Reinigungsmedium beaufschlagen zu können, ist in dem Modulgehäuse 186 eine Reinigungsmedium-Düsenanordnung 252 angeordnet, welche eine oberhalb des Förderbandes 104 angeordnete obere Düsenleiste 254 und eine unterhalb des Förderbandes 104 angeordnete untere Düsenleiste 256 umfasst (siehe die Fig. 7 bis 10).

Die beiden Düsenleisten 254 und 256 sind mittels eines vertikalen Verbindungsstücks 258 miteinander verbunden.

Das Verbindungsstück 258 enthält eine ungefähr mittige Anschlussbohrung 260, an welche die von der Versorgungseinheit 140 kommende Reinigungsmedium-Zuführleitung 166 angeschlossen ist.

Die Anschlussbohrung 260 mündet in einen Verzweigungskanal 262 mit einem oberen Abschnitt 264 und einem unteren Abschnitt 266.

Der obere Abschnitt 264 des Verzweigungskanals 262 steht in Fluidverbindung mit einem oberen Düsenzuführkanal 268, durch welchen das Reinigungsmedium zu den Düseneintritten von einer oder mehreren, beispielsweise sechs, oberen Reinigungsmedium-Düsen 270 gelangt, welche an der dem Förderband 104 zugewandten Unterseite der oberen Düsenleiste 254 angeordnet sind und vertikal nach unten gerichtete Düsenachsen aufweisen.

Der untere Abschnitt 266 des Verzweigungskanals 262 steht in Fluidverbindung mit einem unteren Düsenzuführkanal 272, durch welchen das Reinigungsmedium zu den Düseneintritten von einer oder mehreren, beispielsweise sechs, unteren Reinigungsmedium-Düsen 274 gelangt, welche an der dem Förderband 104 zugewandten Oberseite der unteren Düsenleiste 256 angeordnet sind und vertikal nach oben weisende Düsenachsen aufweisen.

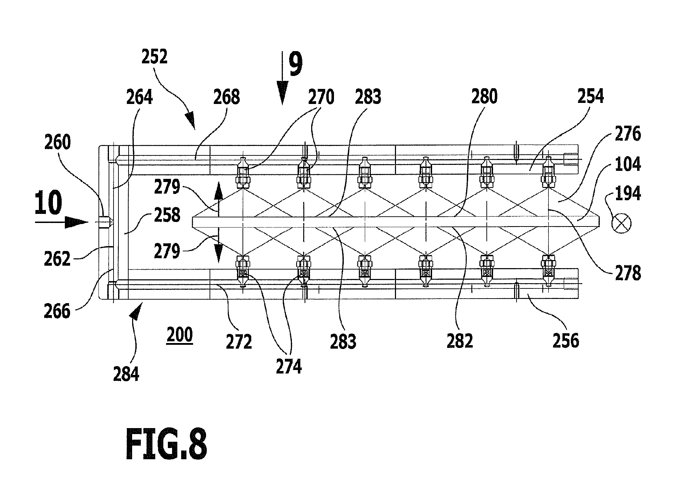

Die Reinigungsmedium-Düsen 270 und 274 sind als Axial-Vollkegeldüsen ausgebildet und erzeugen, wie aus den Fig. 8 bis 10 zu ersehen ist, jeweils einen Reinigungsmedium-Strahl 276 mit einer parallel zur jeweiligen Düsenachse verlaufenden Reinigungsmedium-Strahlachse 278, welche vertikal und parallel zur lokalen Oberflächennormalen 279 des Förderbandes 104 ausgerichtet ist.

Die Reinigungsmedium-Strahlen 276 sind im Wesentlichen rotationssymmetrisch bezüglich der jeweiligen Reinigungsmedium-Strahlachse 278 ausgebildet und erweitern sich vom Düsenaustritt kreiskegelförmig bis zum Auftreffen des Reinigungsmediums auf der den oberen Reinigungsmedium-Düsen 270 zugewandten Innenseite 280 des Förderbandes 104 bzw. bis zum Auftreffen des Reinigungsmediums auf der den unteren Reinigungsmedium-Düsen 274 zugewandten Außenseite 282 des Förderbandes 104.

Dabei wird die in der Bandreinigungsvorrichtung 130 unten liegende Hauptfläche 283 des Förderbandes 104 als dessen Außenseite 282 bezeichnet, weil diese Seite im Obertrum 108, wo das Förderband 104 mit Speisen, Speisenbehältern und/oder Speisentabletts belegt wird, nach außen zu der oberen Durchtrittsöffnung 124 des Gehäuses 114 der Fördervorrichtung 100 weist, während die in der Bandreinigungsvorrichtung 130 oben liegende Innenseite 280 des Förderbandes 104 im Obertrum 108 dieser Durchtrittsöffnung 124 des Gehäuses 114 abgewandt ist und somit nach innen weist.

Da die Außenseite 282 des Förderbandes 104 im Betrieb der Fördervorrichtung 100 mit den Speisen, Speisenbehältern und/oder Speisentabletts belegt wird, ist diese Außenseite 282 normalerweise stärker verschmutzt als die Innenseite 280.

Durch Verschleppung von Schmutz von der Außenseite 282 aus kann aber auch die Innenseite 280 des Förderbandes 104 verschmutzt sein und einer Reinigung bedürfen.

Deshalb werden in der Bandreinigungsvorrichtung 130 sowohl die Innenseite 280 als auch die Außenseite 282 des Förderbandes 104 gereinigt.

Im Vorreinigungsmodul 132 werden daher sowohl die Innenseite 280 als auch die Außenseite 282 des Förderbandes 104 mit dem Reinigungsmedium beaufschlagt.

Die Reinigungsmedium-Düsen 270, 274 und die Düsenleisten 254, 256 sowie das Verbindungsstück 258 bilden zusammen eine Vorreinigungsvorrichtung 284, die in dem Vorreinigungsmodul 132 angeordnet ist.

Das Reinigungsmedium wird den Reinigungsmedium-Düsen 270, 274 vorzugsweise unter einem erhöhten Druck von 2 bar oder mehr, beispielsweise von ungefähr 3 bar, zugeführt.

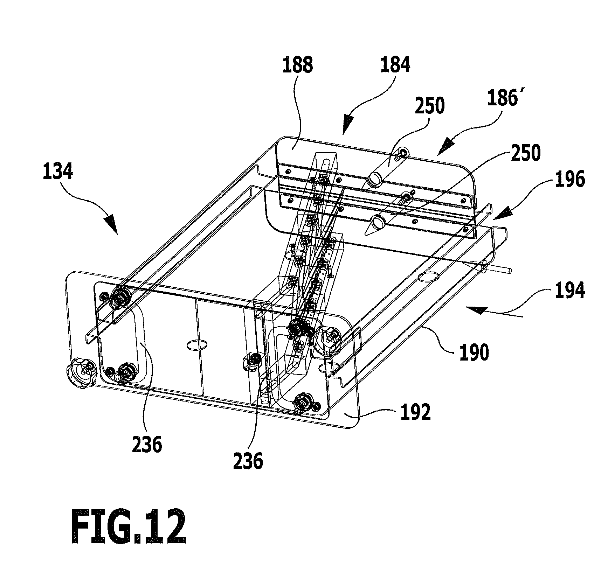

Das Reinigungsmodul 134, welches in den Fig. 12 bis 19 im Einzelnen dargestellt ist, weist ein Modulgehäuse 186' auf, welches grundsätzlich genauso aufgebaut ist wie das Modulgehäuse 186 des Vorreinigungsmoduls 132, so dass insoweit auf die vorstehende Beschreibung des Modulgehäuses 186 des Vorreinigungsmoduls 132 Bezug genommen wird.

Das Modulgehäuse 186' weist lediglich in der Bandlaufrichtung 194 eine größere Ausdehnung auf als das Modulgehäuse 186 des Vorreinigungsmoduls 132.

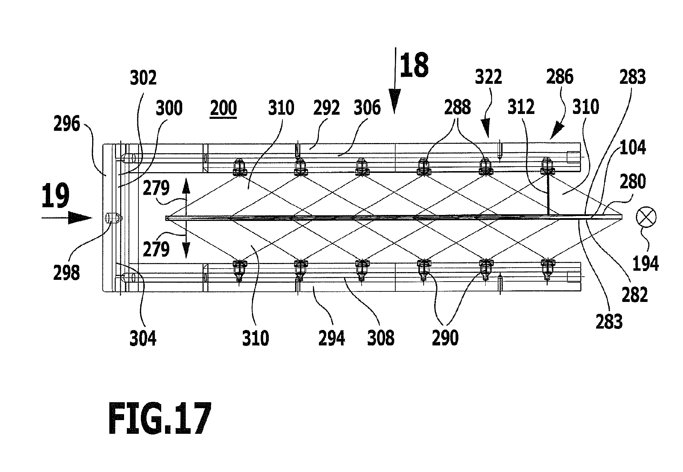

Der Grund hierfür ist, dass die in den Fig. 17 bis 19 im Detail dargestellte Spülmedium-Düsenanordnung 286 in der Bandlaufrichtung 194 relativ zueinander versetzte obere Spülmedium-Düsen 288 und untere Spülmedium-Düsen 290 aufweist, wie dies nachstehend noch genauer erläutert werden wird.

Wie am besten aus Fig. 17 zu ersehen ist, umfasst die Spülmedium-Düsenanordnung 286 in dem Reinigungsmodul 134 eine oberhalb des Förderbandes 104 angeordnete obere Düsenleiste 292, an deren dem Förderband 104 zugewandter Unterseite eine oder mehrere, beispielsweise sechs, obere Spülmedium-Düsen 288 angeordnet sind, und eine unterhalb des Förderbandes 104 angeordnete untere Düsenleiste 294, an deren dem Förderband 104 zugewandter Oberseite eine oder mehrere, beispielsweise sechs, untere Spülmedium-Düsen 290 angeordnet sind.

Die obere Düsenleiste 292 und die untere Düsenleiste 294 sind mittels eines vertikalen Verbindungsstücks 296 miteinander verbunden.

Das Verbindungsstück 296 weist eine ungefähr mittige Anschlussbohrung 298 auf, an welche die von der Versorgungseinheit 140 kommende Spülmedium-Zuführleitung 166 angeschlossen ist.

Die Anschlussbohrung 298 mündet in einen Verzweigungskanal 300 mit einem oberen Abschnitt 302 und einem unteren Abschnitt 304.

Der obere Abschnitt 203 des Verzweigungskanals 300 steht in Fluidverbindung mit einem oberen Düsenzuführkanal 306, durch welchen das Spülmedium zu den Düseneintritten der oberen Spülmedium-Düsen 288 gelangt.

Der untere Abschnitt 304 des Verzweigungskanals 300 steht in Fluidverbindung mit einem unteren Düsenzuführkanal 308, durch welchen das Spülmedium zu den Düseneintritten der unteren Spülmedium-Düsen 290 gelangt.

Die Spülmedium-Düsen 288, 290 sind vorzugsweise als Flachstrahldüsen ausgebildet und erzeugen jeweils einen Spülmedium-Strahl 310 mit einer Spülmedium-Strahlachse 312, welche im Wesentlichen parallel zu einer jeweiligen Düsenachse der Spülmedium-Düsen 288, 290 ausgerichtet ist.

Die Spülmedium-Strahlen 310 sind nicht kreiskegelförmig ausgebildet, sondern weisen die Form eines abgeflachten Kegels mit der Spülmedium-Strahlachse 312 als Mittelachse auf.

Durch die Spülmedium-Strahlachse 312 verlaufen jeweils eine Spülmediumstrahl-Längsmittelebene 315, längs welcher der Spülmedium-Strahl 312 seine größte Ausdehnung aufweist, und eine Spülmediumstrahl-Quermittelebene 317, längs welcher der Spülmedium-Strahl 312 seine kleinste Ausdehnung aufweist.

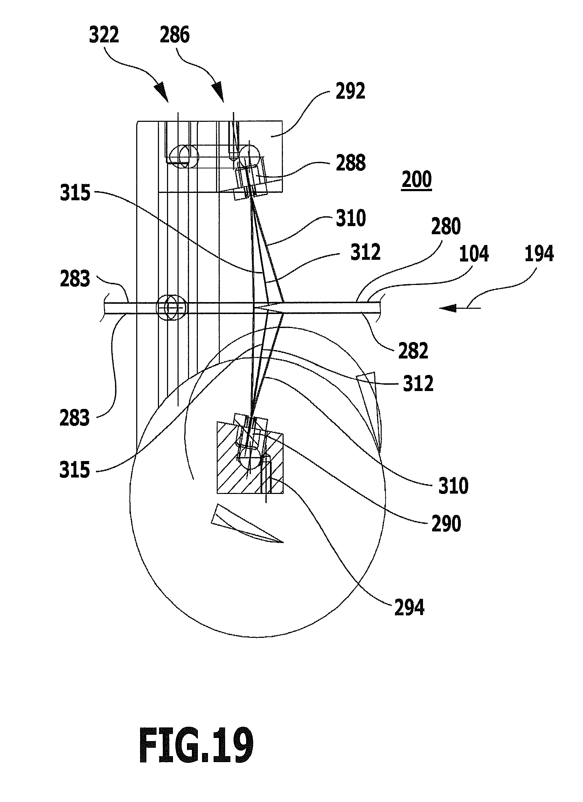

Wie am besten aus Fig. 19 zu ersehen ist, sind die Spülmedium-Strahlachsen 312 nicht vertikal ausgerichtet; vielmehr sind die Spülmedium-Strahlachsen 312 gegenüber der Vertikalen und damit auch gegenüber der Oberflächennormalen 279 des Förderbandes 104 um einen spitzen Winkel von mindestens ungefähr 1°, vorzugsweise um einen Winkel von mindestens ungefähr 5°, und um einen Winkel von höchstens ungefähr 20°, vorzugsweise von höchstens ungefähr 15°, geneigt.

Insbesondere kann der Neigungswinkel der Spülmedium-Strahlen 310 gegenüber der Vertikalen und gegenüber der Oberflächennormalen 279 des Förderbandes 104 ungefähr 10° betragen.

Dabei sind die Spülmedium-Strahlachsen 312 so geneigt, dass die Spülmedium-Strahlen 310 eine Strömungsgeschwindigkeit mit einer entgegengesetzt zur lokalen Bandlaufrichtung 194 gerichteten Komponente aufweisen.

Durch die Spülmedium-Strahlen 310 wird somit das an dem Förderband 104 anhaftende Reinigungsmedium, zusammen mit dem auf dem Förderband 104 befindlichen Schmutz, der durch das Reinigungsmedium gelöst worden ist, in einer zur Bandlaufrichtung 194 entgegengesetzten Richtung weggeschwemmt.

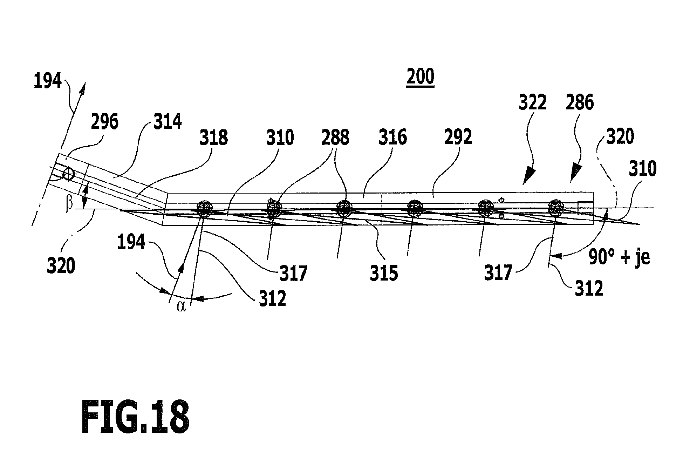

Ferner sind die Spülmedium-Düsen 288, 290 gegenüber der lokalen Bandlaufrichtung 194 so geneigt, dass die senkrechte Projektion der Spülmedium-Strahlachsen 312 auf die jeweils zugewandte Hauptfläche 283 des Förderbandes 104, also auf die Innenseite 280 bzw. auf die Außenseite 282 des Förderbandes 104, mit der lokalen Bandlaufrichtung 194 einen spitzen Winkel α von mindestens ungefähr 1°, vorzugsweise von mindestens ungefähr 5°, und von höchstens ungefähr 40°, vorzugsweise von höchstens ungefähr 30°, einschließt (siehe Fig. 18).

Beispielsweise kann der Winkel α zwischen der senkrechten Projektion der Spülmedium-Strahlen 310 auf die Hauptfläche 283 des Förderbandes 104 einerseits und der lokalen Bandlaufrichtung 194 andererseits ungefähr 15° betragen.

Durch diese Neigung der Spülmedium-Strahlen 310 gegenüber der lokalen Bandlaufrichtung 194 wird erreicht, dass das Spülmedium das an dem Förderband 104 anhaftende Reinigungsmedium und den von dem Reinigungsmedium abgelösten Schmutz nicht entgegengesetzt parallel zur Bandlaufrichtung 194, sondern stattdessen zu einem seitlichen Rand des Förderbandes 104 hin gerichtet wegschwemmt.

Wie aus Fig. 18 zu ersehen ist, sind die Spülmedium-Strahlen 310 in diesem Fall so ausgerichtet, dass das Reinigungsmedium und der hiervon gelöste Schmutz zu einem (in der Bandlaufrichtung 194 gesehen) rechten Rand 313 des Förderbandes 104 und über diesen rechten Rand hinaus geschwemmt wird.

Das über den Rand des Förderbandes 104 hinaus geschwemmte Gemisch aus Spülmedium, Reinigungsmedium und Schmutz gelangt nach unten in das Gehäuseunterteil 190 des Modulgehäuses 186', von wo es durch die Ablauflöcher 212 in der Bodenwand 210 in die unter dem Reinigungsmodul 134 angeordnete Auffangwanne 214 abläuft.

Wie am besten aus Fig. 18 zu ersehen ist, kommt die Neigung der Spülmedium-Strahlachsen 312 gegenüber der Bandlaufrichtung 194 dadurch zustande, dass zum einen jede der Düsenleisten 292, 294 jeweils einen dem Verbindungsstück 296 zugewandten Halteabschnitt 314 und einen dem Verbindungsstück 296 abgewandten Düsenabschnitt 316 umfasst, wobei die Längsrichtung 318 des Halteabschnitts 314 im Wesentlichen senkrecht zur Bandlaufrichtung 194 ausgerichtet ist und die Längsrichtung 320 des Düsenabschnitts 320 mit der Längsrichtung 318 des Halteabschnitts 314 einen spitzen Winkel β einschließt.

Der Winkel β beträgt vorzugsweise mindestens ungefähr 10° und vorzugsweise höchstens ungefähr 30° und kann beispielsweise ungefähr 20° betragen.

Zum anderen sind die Spülmedium-Düsen 288 und 290 an dem Düsenabschnitt 316 der jeweiligen Düsenleiste 292, 294 so angeordnet, dass die senkrechte Projektion der jeweiligen Spülmedium-Strahlachse 312 auf eine Hauptfläche 283 des Förderbandes 104 mit der senkrechten Projektion der Längsrichtung 320 des Düsenabschnitts 316 auf dieselbe Hauptfläche 283 des Förderbandes 104 einen stumpfen Winkel von 90°+γ einschließt, wobei der Winkel γ 0° oder mehr betragen kann und vorzugsweise höchstens 10° beträgt. Der Winkel γ kann beispielsweise ungefähr 5° betragen.

Im dargestellten Ausführungsbeispiel ist die Neigung der Spülmedium-Düsen 288, 290 relativ zu der Längsrichtung 320 des Düsenabschnitts 316 so gerichtet, dass die Neigung der Längsrichtung 320 des Düsenabschnitts 316 relativ zu der lokalen Bandlaufrichtung 194 teilweise kompensiert wird.

Der resultierende Neigungswinkel α zwischen den Spülmedium-Strahlachsen 312 und der Bandlaufrichtung 194 ergibt sich somit zu β - γ.

Bei einer Variante der dargestellten Ausführungsform könnte aber auch vorgesehen sein, dass die Spülmedium-Düsen 288, 290 relativ zu der Längsrichtung 320 des Düsenabschnitts 316 so geneigt sind, dass die Längsrichtung 320 des Düsenabschnitts 316 und die senkrechte Projektion der Spülmedium-Strahlachsen 312 auf die Hauptfläche 283 des Förderbandes 104 miteinander einen spitzen Winkel einschließen, so dass der Winkel γ negativ wird. In diesem Fall wird die Neigung der Spülmedium-Strahlachsen 312 gegenüber der lokalen Bandlaufrichtung 194 durch die Neigung der Düsenachsen der Spülmedium-Düsen 288, 290 relativ zu der Längsrichtung 320 des Düsenabschnitts 316 noch vergrößert.

Durch die Neigung der Düsenachsen und somit der Spülmedium-Strahlachsen 312 relativ zur Längsrichtung 320 des Düsenabschnitts 316 wird erreicht, dass die flachkegelig ausgebildeten Spülmedium-Strahlen 310 einander benachbarter Spülmedium-Düsen 288, 290 einander im Wesentlichen nicht überlappen, bis sie auf das Förderband 104 treffen.

Hierdurch wird zum einen vermieden, dass die gezielte Ausrichtung der Strömungsrichtung des Spülmediums in den Spülmedium-Strahlen 310 durch Kollisionen zwischen einander benachbarten Spülmedium-Strahlen 310 verloren geht.

Zum anderen wird durch den Versatz der Spülmedium-Strahlen 310 längs der Bandlaufrichtung 194 erreicht, dass jede Stelle des Förderbandes 104 stets nur in einer Richtung, und zwar zu einem der seitlichen Ränder des Förderbandes 104 hin, mit dem Spülmedium beaufschlagt wird, so dass durch das Spülmedium eine zu dem betreffenden seitlichen Rand (im vorliegenden Ausführungsbeispiel zum rechten Rand 313) des Förderbandes 104 hin gerichtete Fluidströmung erzeugt wird.

Grundsätzlich könnte auch vorgesehen sein, dass die Neigungen der Spülmedium-Strahlachsen 312 gegenüber der Oberflächennormalen 279 des Förderbandes 104 und/oder gegenüber der lokalen Bandlaufrichtung 194 nicht bei allen Spülmedium-Strahlen 310 gleich sind, sondern zwischen den verschiedenen Spülmedium-Strahlen 310 variieren.

In diesem Fall gelten die vorstehend genannten Angaben zu bevorzugten Neigungswinkeln entsprechend für die mittleren Neigungswinkel aller Spülmedium-Düsen 288, 290.

Die Spülmedium-Düsen 288, 290 und die Düsenleisten 292, 294 sowie das Verbindungsstück 296 bilden zusammen eine Reinigungsvorrichtung 322, die in dem Reinigungsmodul 134 angeordnet ist.

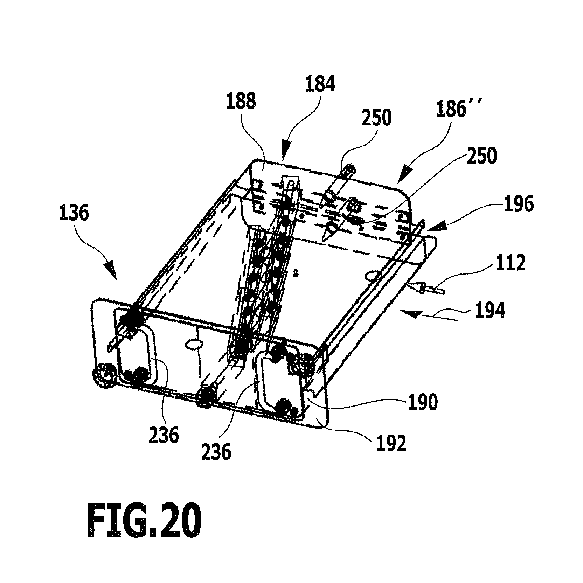

Das in den Fig. 20 bis 27 im Einzelnen dargestellte Trocknungsmodul 136 umfasst ein Modulgehäuse 186", dessen grundsätzlicher Aufbau dem des Modulgehäuses 186 des Vorreinigungsmoduls 132 entspricht, so dass diesbezüglich auf die vorstehende Beschreibung des Vorreinigungsmoduls 132 Bezug genommen wird.

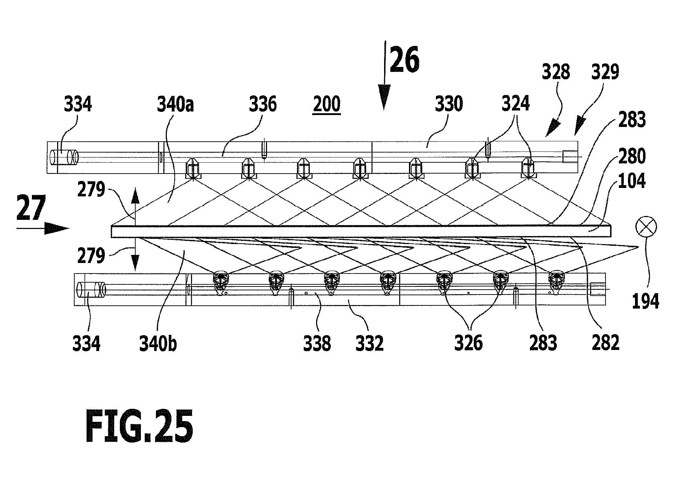

Die Ausdehnung des Modulgehäuses 186" in der Bandlaufrichtung 194 entspricht im Wesentlichen der Ausdehnung des Modulgehäuses 186' des Reinigungsmoduls 134 in dieser Richtung, da auch im Trocknungsmodul 136 obere Trocknungsmedium-Düsen 324 und untere Trocknungsmedium-Düsen 326 einer Trocknungsmedium-Düsenanordnung 329 in der Bandlaufrichtung 194 versetzt zueinander angeordnet sind, wie im Folgenden unter Bezugnahme auf die Fig. 25 bis 27 näher beschrieben werden wird.

Eine im Innenraum 200 des Trocknungsmoduls 136 angeordnete Trocknungsvorrichtung 328 umfasst eine oberhalb des Förderbands 104 angeordnete obere Düsenleiste 330 und eine unterhalb des Förderbandes 104 angeordnete untere Düsenleiste 332.

Eine oder mehrere, beispielsweise sieben, obere Trocknungsmedium-Düsen 324 sind an der dem Förderband 104 zugewandten Unterseite der oberen Düsenleiste 330 angeordnet.

Eine oder mehrere, beispielsweise sieben, untere Trocknungsmedium-Düsen 326 sind an der dem Förderband 104 zugewandten Oberseite der unteren Düsenleiste 332 angeordnet.

Jede der Düsenleisten 330, 332 weist jeweils eine Anschlussbohrung 334 auf, an welche die von der Versorgungseinheit 140 kommende Trocknungsmedium-Zuführleitung 172 angeschlossen ist.

Um den gleichzeitigen Anschluss beider Düsenleisten 330, 332 an die Trocknungsmedium-Zuführleitung 172 zu ermöglichen, weist die Trocknungsmedium-Zuführleitung 172 eine (nicht dargestellte) Verzweigung auf.

Von der Anschlussbohrung 334 der oberen Düsenleiste 330 führt ein oberer Düsenzuführkanal 336 zu den Düseneintritten der oberen Trocknungsmedium-Düsen 324.

Von der Anschlussbohrung 334 der unteren Düsenleiste 332 führt ein unterer Düsenzuführkanal 338 zu den Düseneintritten der unteren Trocknungsmedium-Düsen 326.

Durch die Düsenzuführkanäle 336, 338 gelangt somit das gasförmige Trocknungsmedium, beispielsweise Druckluft, unter einem erhöhten Druck von vorzugsweise mindestens ungefähr 2 bar zu den Trocknungsmedium-Düsen 324 und 326.

Die Trocknungsmedium-Düsen 324 und 326 sind vorzugsweise als Flachstrahldüsen ausgebildet, welche Trocknungsmedium-Strahlen 340a bzw. 340b erzeugen, die nicht rotationssymmetrisch, sondern abgeflacht um die jeweils mittige Trocknungsmedium-Strahlachse 342a bzw. 342b ausgebildet sind.

Durch die Trocknungsmedium-Strahlachsen 342a, 342b verlaufen jeweils eine Trocknungsmediumstrahl-Längsmittelebene 343, längs welcher der Trocknungsmedium-Strahl 340a, 340b seine größte Ausdehnung aufweist, und eine Trocknungsmediumstrahl-Quermittelebene 345, längs welcher der Trocknungsmedium-Strahl 340a, 340b seine kleinste Ausdehnung aufweist.

Dabei verlaufen die Trocknungsmedium-Strahlachsen 342a der Trocknungsmedium-Strahlen 340a aus den oberen Trocknungsmedium-Düsen 324 im Wesentlichen parallel zur Vertikalen und parallel zur Oberflächennormalen 279 des Förderbandes 104.

Die Trocknungsmedium-Strahlachsen 342b der Trocknungsmedium-Strahlen 340b aus den unteren Trocknungsmedium-Düsen 326 sind hingegen gegenüber der Vertikalen und gegenüber der Oberflächennormalen 279 des Förderbandes 104 um einen spitzen Winkel δ geneigt.

Dieser Winkel δ beträgt vorzugsweise mindestens ungefähr 1°, besonders bevorzugt mindestens ungefähr 20°, insbesondere mindestens ungefähr 40°, und vorzugsweise höchstens ungefähr 60°, besonders bevorzugt höchstens ungefähr 50°.

Beispielsweise kann der Winkel δ ungefähr 45° betragen.

Dabei sind die Trocknungsmedium-Strahlachsen 342b vorzugsweise so geneigt, dass die unteren Trocknungsmedium-Strahlen 340b eine Strömungsgeschwindigkeit mit einer entgegengesetzt zur Bandlaufrichtung 194 gerichteten Komponente aufweisen.

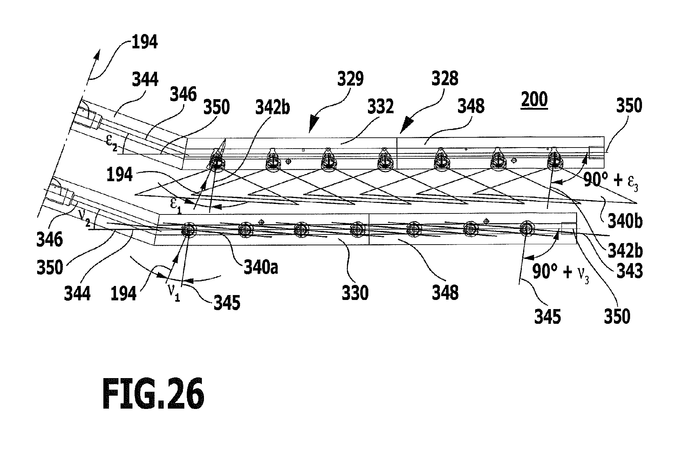

Wie am besten aus Fig. 26 zu ersehen ist, sind die Trocknungsmedium-Strahlachsen 342a, 342b ferner so gegenüber der lokalen Bandlaufrichtung 194 geneigt, dass die senkrechten Projektionen der oberen Trocknungsmediumstrahl-Quermittelebene 345 bzw. der unteren Trocknungsmedium-Strahlachse 342b auf eine Hauptfläche 283 (Innenseite 280 oder Außenseite 282) des Förderbandes 104 mit der Bandlaufrichtung 194 einen spitzen Winkel V₁ bzw. ε₁ einschließen.

Diese Winkel V₁ bzw. ε₁ betragen vorzugsweise mindestens ungefähr 1°, insbesondere mindestens ungefähr 5°, und vorzugsweise höchstens ungefähr 40°, insbesondere höchstens ungefähr 30°.

Bei einer bevorzugten Ausgestaltung der Trocknungsvorrichtung 328 ist der Winkel ε₁ zwischen der senkrechten Projektion der Trocknungsmedium-Strahlachsen 342b der unteren Trocknungsmedium-Strahlen 340b und der Bandlaufrichtung 194 größer als der Winkel V₁ zwischen der senkrechten Projektion der Trocknungsmediumstrahl-Quermittelebenen 345 der oberen Trocknungsmedium-Strahlen 340a und der Bandlaufrichtung 194.

Beispielsweise kann der Winkel ε₁ ungefähr 16° und der Winkel V₁ ungefähr 15° betragen.

Der Neigungswinkel zwischen den Trocknungsmediumstrahl-Quermittelebenen 345 und den Trocknungsmittel-Strahlachsen 342b einerseits und der Bandlaufrichtung 194 andererseits kommt zum einen dadurch zustande, dass die Düsenleisten 330, 332 jeweils einen der Frontplatte 192 des Modulgehäuses 186" zugewandten Halteabschnitt 344 mit einer Längsrichtung 346 und einen der Frontplatte 192 abgewandten Düsenabschnitt 348 mit einer Längsrichtung 350 umfassen.

Dabei ist die Längsrichtung 346 der Halteabschnitte 344 im Wesentlichen senkrecht zur lokalen Bandlaufrichtung 194 ausgerichtet, während die Längsrichtung 350 des Düsenabschnitts 348 mit der Längsrichtung 346 des Halteabschnitts 344 jeweils einen spitzen Winkel v₂ (bei der oberen Düsenleiste 330) bzw. ε₂ (bei der unteren Düsenleiste 332) einschließt.

Zum anderen sind die Düsen und somit die Trocknungsmediumstrahl-Quermittelebenen 345 und die Trocknungsmedium-Strahlachsen 342b gegenüber der Längsrichtung 350 des Düsenabschnitts 348 jeweils so geneigt, dass die senkrechte Projektion der Trocknungsmediumstrahl-Quermittelebenen 345 der oberen Trocknungsmedium-Strahlen 340a mit der senkrechten Projektion der Längsrichtung 350 des Düsenabschnitts 348 auf eine Hauptfläche 283 des Förderbandes 104 einen Winkel 90°+ν₃ einschließt und die senkrechte Projektion der Trocknungsmedium-Strahlachsen 342b der unteren Trocknungsmedium-Strahlen 340b mit der senkrechten Projektion der Längsrichtung 350 des Düsenabschnitts 348 auf eine Hauptfläche 283 des Förderbandes 104 einen Winkel 90°+ε₃ einschließt.

Der resultierende Neigungswinkel zwischen der senkrechten Projektion der Trocknungsmediumstrahl-Quermittelebenen 345 der oberen Trocknungsmedium-Strahlen 340a und der Bandlaufrichtung 194 ergibt sich somit zu ν₁ = ν₂ - ν₃.

Der resultierende Neigungswinkel zwischen der Projektion der Trocknungsmedium-Strahlachsen 342b der unteren Trocknungsmedium-Strahlen 340b und der Bandlaufrichtung 194 ergibt sich zu ε₁ = ε₂ - ε₃.

Durch die Neigung der Trocknungsmediumstrahl-Quermittelebenen 345 und der Trocknungsmedium-Strahlachsen 342b gegenüber der Bandlaufrichtung 194 wird erreicht, dass das Trocknungsmedium die Innenseite 280 bzw. die Außenseite 282 des Förderbandes 104 nicht im Mittel entgegengesetzt parallel zur Bandlaufrichtung 194 beaufschlagt, sondern im Mittel schräg zur Bandlaufrichtung 194 zu einem seitlichen Rand des Förderbandes 104 (bei der dargestellten Ausführungsform zu einem rechten seitlichen Rand 313 des Förderbandes 104) hin gerichtet, so dass nach dem Spülvorgang im Reinigungsmodul 134 noch an dem Förderband 104 verbliebene Flüssigkeit und/oder Schmutzpartikel durch die Trocknungsmedium-Strömung zu dem betreffenden seitlichen Rand des Förderbandes 104 bewegt werden und über den betreffenden seitlichen Rand des Förderbandes 104 hinaus und nach unten in das Gehäuseunterteil 190 des Modulgehäuses 186" gelangen.

Aus dem Gehäuseunterteil 190 laufen solche von dem Förderband 104 abgeblasene Flüssigkeiten und gegebenenfalls darin enthaltene Schmutzpartikel durch die Ablauflöcher 212 in der Bodenwand 210 in die unter dem Trocknungsmodul 136 angeordnete Auffangwanne 214 ab.

Außerdem wird durch die beschriebene Neigung der Trocknungsmediumstrahl-Quermittelebenen 345 und der Trocknungsmedium-Strahlachsen 342b gegenüber der Längsrichtung 350 des Düsenabschnitts 348 erreicht, dass die Trocknungsmedium-Strahlen 340a, 340b einander benachbarter Trocknungsmedium-Düsen 324, 326 so in der Bandlaufrichtung 194 relativ zueinander versetzt sind, dass die Trocknungsmedium-Strahlen 340a, 340b einander im Wesentlichen nicht überlappen, bis sie auf das Förderband 104 treffen.

Hierdurch wird eine Beeinflussung der Ausströmrichtung des Trocknungsmediums aus den Trocknungsmedium-Düsen 324, 326 aufgrund einer Kollision zwischen benachbarten Trocknungsmedium-Strahlen 340a, 340b vermieden.

Ferner wird erreicht, dass jede Stelle des Förderbandes 104 in der Trocknungsvorrichtung 328 mit Trocknungsmedium einer im Wesentlichen konstanten Strömungsrichtung beaufschlagt wird, so dass an dem Förderband 104 verbliebenes Reinigungsmedium und/oder Spülmedium und gegebenenfalls daran verbliebene Schmutzpartikel gezielt bis zu einem seitlichen Rand des Förderbandes 104 und darüber hinaus bewegt werden.

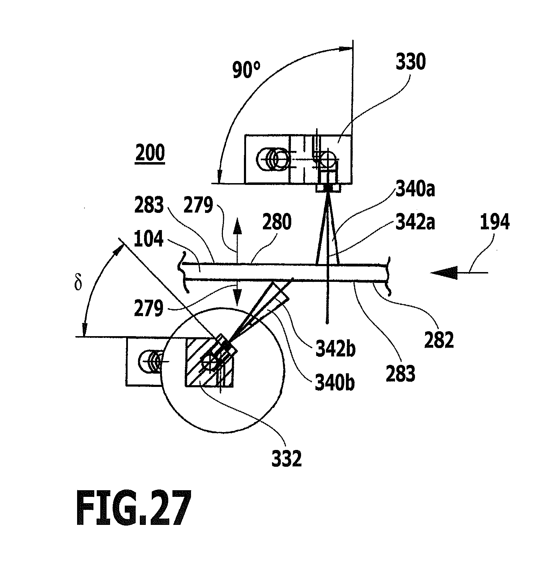

Von der Spülmedium-Düsenanordnung 286 im Reinigungsmodul 134 unterscheidet sich die Trocknungsmedium-Düsenanordnung 329 im Trocknungsmodul 136 insbesondere auch dadurch, dass die obere Düsenleiste 330 und die untere Düsenleiste 332 der Trocknungsmedium-Düsenanordnung 329 nicht genau vertikal übereinander liegen, sondern, wie insbesondere aus den Fig. 26 und 27 zu ersehen ist, in der Bandlaufrichtung 194, vorzugsweise um mehr als eine Breite einer Düsenleiste 330, 332, gegeneinander versetzt sind.

Hierdurch wird erreicht, dass jede Stelle der Innenseite 280 des Förderbandes 104 zunächst von oben mit Trocknungsmedium aus den oberen Trocknungsmedium-Düsen 324 beaufschlagt wird, bevor die entsprechende Stelle der Außenseite 282 des Förderbandes 104 mit dem Trocknungsmedium aus den unteren Trocknungsmedium-Düsen 326 beaufschlagt wird. Hierdurch ergibt sich eine besonders wirksame Entfernung von Restflüssigkeit und restlichen Schmutzpartikeln von beiden Seiten des Förderbandes 104.

Die vorstehend beschriebene Fördervorrichtung 100 mit Bandreinigungsvorrichtung 130 funktioniert wie folgt:

Während einer Förderphase der Fördervorrichtung 100 wird das Förderband 104 zu einer Umlaufbewegung mit einer Bandlaufgeschwindigkeit im Bereich von ungefähr 2 m/min bis 18 m/min angetrieben.

In dieser Förderphase können Speisen, Speisenbehälter und/oder Speisentabletts auf das Obertrum 108 des Förderbandes 104 aufgebracht und wieder vom Obertrum 108 abgenommen werden.

Wenn das Förderband 104 in dieser Förderphase verschmutzt worden ist, kann durch Betätigung des Betätigungselements 180 eine Reinigungsphase der Fördervorrichtung 100 eingeleitet werden, in welcher das Förderband 104 beim Hindurchlaufen durch das Vorreinigungsmodul 132, das Reinigungsmodul 134 und das Trocknungsmodul 136 gereinigt und anschließend getrocknet wird.

Die Steuervorrichtung 174 setzt während der Reinigungsphase die Bandlaufgeschwindigkeit auf eine niedrigere Bandlaufgeschwindigkeit von höchstens 2 m/min, beispielsweise von ungefähr 1 m/min, herab.

Grundsätzlich kann auch während der Reinigungsphase damit fortgefahren werden, Speisen, Speisenbehälter und/oder Speisentabletts auf das Obertrum 108 des Förderbandes 104 aufzulegen bzw. von demselben zu entnehmen, da das Förderband 104 nach dem Passieren des Trocknungsmoduls 136 vollständig getrocknet und betriebsbereit ist.

Im Vorreinigungsmodul 132 wird das Förderband 104 beidseitig mit dem Reinigungsmedium beaufschlagt.

Während das mit dem Reinigungsmedium benetzte Förderband 104 langsam von dem Vorreinigungsmodul 132 zu dem Reinigungsmodul 134 transportiert wird, kann das Reinigungsmedium auf den an dem Förderband 104 vorhandenen Schmutz einwirken und hierdurch den Reinigungseffekt verstärken.

Im Reinigungsmodul 134 wird das Förderband 104 beidseitig mit dem Spülmedium beaufschlagt, wobei die die Spülmedium-Strahlen 310 erzeugenden Spülmedium-Düsen 288, 290 leicht schräg versetzt angeordnet sind, so dass das Spülmedium schräg versetzt auf das Förderband 104 aufgesprüht wird.

Dadurch werden sich lösende Schmutzrechte infolge der schräg versetzten Anordnung mit dem Spülmedium-Strahl direkt von dem Förderband 104 über einen seitlichen Rand des Förderbandes 104 weggesprüht.

Das Förderband 104, von dem der Schmutz und das Reinigungsmedium durch den Spülvorgang im Reinigungsmodul 134 zumindest teilweise entfernt worden sind, gelangt in das Trocknungsmodul 136, in welchem das Förderband 104 beidseitig mit dem Trocknungsmedium beaufschlagt wird.

Durch das gegen beide Seiten des Förderbandes 104 geblasene Trocknungsmedium werden Reste von Reinigungsmedium, Spülmedium und Schmutz über einen seitlichen Rand des Förderbandes 104 hinweg geblasen, so dass das Förderband 104 nach dem Passieren des Trocknungsmoduls 136 beidseitig trocken und vollständig gereinigt ist.

Überschüssiges Reinigungsmedium aus dem Vorreinigungsmodul 132, das Gemisch aus Spülmedium, Reinigungsmedium und Schmutz aus dem Reinigungsmodul 134 sowie die Reste von Spülmedium, Reinigungsmedium und Schmutz aus dem Trocknungsmodul 136 gelangen durch die Ablauflöcher 212 in den Bodenwänden 210 der genannten Module in die sich unter den Modulen erstreckende Auffangwanne 214.

Das in der Auffangwanne 214 enthaltene Gemisch aus Spülmedium, Reinigungsmedium und Schmutz fließt durch die Abflussöffnung 228 der Auffangwanne 214 ab und wird entweder entsorgt oder aber, nach einer Reinigung und Wiederaufarbeitung, als Reinigungsmedium oder als Spülmedium wiederverwendet.

Der Reinigungsbetrieb während der Reinigungsphase wird optisch und/oder akustisch durch die Signaleinrichtung 182 angezeigt.

Der Ablauf des Reinigungsprozesses wird von der Steuervorrichtung 174 koordiniert, welche insbesondere eine intelligente speicherprogrammierbare Steuerung (SPS) umfasst.

Die Steuervorrichtung 174 steuert die Zugabe von warmem Wasser, Reinigungszusatz, heißem Wasser und Trocknungsmedium (Druckluft) während der Reinigungsphase über die Versorgungseinheit 140.

Während der Reinigungsphase wird die Bandlaufgeschwindigkeit auf die für den Reinigungsprozess optimale Geschwindigkeit geändert.

Insbesondere wird die Bandlaufgeschwindigkeit so eingestellt, dass die Laufzeit des Förderbandes 104 zwischen dem Vorreinigungsmodul 132 und dem Reinigungsmodul 134 mindestens ungefähr eine halbe Minute, vorzugsweise mindestens ungefähr 1 Minute, beträgt.

Die Reinigungsphase wird fortgeführt, bis jede Stelle des Förderbandes 104 mindestens einmal das Vorreinigungsmodul 132, das Reinigungsmodul 134 und das Trocknungsmodul 136 durchlaufen hat.

Nach einer voreingestellten Reinigungsdauer beendet die Steuervorrichtung 174 die Reinigungsphase selbsttätig.

Nach Ende der Reinigungsphase wird die Bandlaufgeschwindigkeit wieder auf die erhöhte Arbeits-Bandlaufgeschwindigkeit der Förderphase zurückgestellt.

Die gesamte Bandreinigungsvorrichtung 130 mit den Modulen 132, 134 und 136 ist im Gehäuse 114 der Fördervorrichtung 100 integriert und von außen im Wesentlichen nicht sichtbar.

Ist eines der Module 132, 134 oder 136 defekt, so kann das betreffende Modul einzeln ausgetauscht werden. Die in den Modulen 132, 134 und 136 eingebauten Komponenten können zur Reparatur einzeln ausgebaut und wieder montiert werden.

Die Module 132, 134 und 136 können je nach Anforderung frei angeordnet, kombiniert und ausgetauscht werden.

Insbesondere ist es bei einer Variante der beschriebenen Fördervorrichtung 100 möglich, statt eines separaten Reinigungsmoduls 134 und eines separaten Trocknungsmoduls 136 ein kombiniertes Reinigungs- und Trocknungsmodul zu verwenden, in welchem sowohl eine Reinigungsvorrichtung 322 als auch eine Trocknungsvorrichtung 328 angeordnet sind.

An den Eintrittsspalten 196 und den Austrittsspalten 198 der Modulgehäuse 186, 186' und 186" bildet das Förderband 104 zusammen mit dem abgekanteten Rand 202 des Gehäuseunterteils 190 und dem abgekanteten Rand 216 des Gehäuseoberteils 188 jeweils ein Labyrinth, welches ein Austreten von Flüssigkeit aus dem Innenraum 200 des betreffenden Modulgehäuses 186, 186' oder 186" in umgebende Bereiche des Innenraums des Gehäuses 114 der Fördervorrichtung 100 verhindert.

Durch die Dichtung 248 an der Rückseite jedes Modulgehäuses 186, 186' und 186" wird erreicht, dass Flüssigkeit nur durch die Ablauflöcher 212 in der Bodenwand 210 des betreffenden Modulgehäuses 186, 186' oder 186" ablaufen kann.

Grundsätzlich, insbesondere bei Verwendung eines Gurtbandes statt eines Kettenbandes, kann die Trocknung mittels eines gasförmigen Trocknungsmediums auch durch eine Trocknung mittels eines mechanischen Abstreichers ersetzt werden.

## Patentansprüche

1. Bandreinigungsvorrichtung zum Reinigen eines Förderbandes (104), umfassend
eine Vorreinigungsvorrichtung (284) zum Aufbringen eines Reinigungsmediums auf das Förderband (104) und eine Reinigungsvorrichtung (322) zum zumindest teilweisen Entfernen des Reinigungsmediums von dem Förderband (104),
**dadurch gekennzeichnet,**
**dass** die Vorreinigungsvorrichtung (284) in einem Vorreinigungsmodul (132) und die Reinigungsvorrichtung (322) in einem separat von dem Vorreinigungsmodul (132) ausgebildeten Reinigungsmodul (134) angeordnet ist und
**dass** das Vorreinigungsmodul (132) und das Reinigungsmodul (134) längs einer Bandlaufrichtung (194) voneinander beabstandet sind.

2. Bandreinigungsvorrichtung nach Anspruch 1, **dadurch gekennzeichnet, dass** der Abstand zwischen der Vorreinigungsvorrichtung (284) in dem Vorreinigungsmodul (132) und der Reinigungsvorrichtung (322) in dem Reinigungsmodul (134) mindestens 0,5 m beträgt.

3. Bandreinigungsvorrichtung nach einem der Ansprüche 1 oder 2, **dadurch gekennzeichnet, dass** die Reinigungsvorrichtung (322) mindestens eine Spülmedium-Düse (288, 290) umfasst, mittels welcher ein Spülmedium-Strahl (310) mit einer Spülmedium-Strahlachse (312) erzeugbar ist.

4. Bandreinigungsvorrichtung nach Anspruch 3, **dadurch gekennzeichnet, dass** mindestens eine Spülmedium-Strahlachse (312) gegenüber einer Oberflächennormalen (279) des Förderbandes (104) geneigt ist.

5. Bandreinigungsvorrichtung nach einem der Ansprüche 3 oder 4, **dadurch gekennzeichnet, dass** die senkrechte Projektion mindestens einer Spülmedium-Strahlachse (312) auf eine Hauptfläche (283) des Förderbandes (104) gegenüber der Bandlaufrichtung (194) in dem Reinigungsmodul (134) geneigt ist.

6. Bandreinigungsvorrichtung nach einem der Ansprüche 3 bis 5, **dadurch gekennzeichnet, dass** die Bandreinigungsvorrichtung (130) mehrere Spülmedium-Düsen (288, 290) umfasst, die so gegeneinander versetzt angeordnet sind, dass die Spülmedium-Strahlen (310) verschiedener Spülmedium-Düsen (288, 290) einander nicht überlappen.

7. Bandreinigungsvorrichtung nach einem der Ansprüche 1 bis 6, **dadurch gekennzeichnet, dass** die Bandreinigungsvorrichtung (130) eine Trocknungsvorrichtung (328) umfasst, die mindestens eine Trocknungsmedium-Düse (324, 326) umfasst, mittels welcher ein Trocknungsmedium-Strahl (340a, 340b) mit einer Trocknungsmedium-Strahlachse (342a, 342b) erzeugbar ist.

8. Bandreinigungsvorrichtung nach Anspruch 7, **dadurch gekennzeichnet, dass** mindestens eine Trocknungsmedium-Strahlachse (342b) gegenüber einer Oberflächennormalen (279) des Förderbandes (104) in der Trocknungsvorrichtung (328) geneigt ist.

9. Bandreinigungsvorrichtung nach einem der Ansprüche 7 oder 8, **dadurch gekennzeichnet, dass** die senkrechte Projektion mindestens einer Trocknungsmedium-Strahlachse (342a, 342b) auf eine Hauptfläche (283) des Förderbandes (104) gegenüber der Bandlaufrichtung (194) in der Trocknungsvorrichtung (328) geneigt ist.

10. Bandreinigungsvorrichtung nach einem der Ansprüche 7 bis 9, **dadurch gekennzeichnet, dass** die Trocknungsvorrichtung (328) in einem separat von dem Reinigungsmodul (134) und separat von dem Vorreinigungsmodul (132) ausgebildeten Trocknungsmodul (136) angeordnet ist.

11. Bandreinigungsvorrichtung nach einem der Ansprüche 1 bis 10, **dadurch gekennzeichnet, dass** das Förderband (104) mittels der Vorreinigungsvorrichtung (284) beidseitig mit dem Reinigungsmedium und/oder mittels der Reinigungsvorrichtung (322) beidseitig mit einem Spülmedium beaufschlagbar ist.

12. Bandreinigungsvorrichtung nach einem der Ansprüche 1 bis 11, **dadurch gekennzeichnet, dass** das Vorreinigungsmodul (132) und/oder das Reinigungsmodul (134) ein geschlossenes Modulgehäuse (186) umfasst, in welchem das Reinigungsmedium und/oder ein Spülmedium auffangbar und aus welchem das Reinigungsmedium und/oder das Spülmedium über einen Flüssigkeitsablauf abführbar ist.

13. Bandreinigungsvorrichtung nach einem der Ansprüche 1 bis 12, **dadurch gekennzeichnet, dass** unter dem Vorreinigungsmodul (132) und/oder unter dem Reinigungsmodul (134) eine Auffangwanne (214) zum Auffangen und Abführen von Reinigungsmedium und/oder von Spülmedium angeordnet ist.

14. Fördervorrichtung, insbesondere zum Fördern von Speisen, Speisenbehältern und/oder Speisentabletts, umfassend ein umlaufendes Förderband (104) und eine Bandreinigungsvorrichtung (130) nach einem der Ansprüche 1 bis 13.

15. Fördervorrichtung nach Anspruch 14, **dadurch gekennzeichnet, dass** die Fördervorrichtung (100) eine Steuerungsvorrichtung (174) umfasst, mittels welcher die Bandlaufgeschwindigkeit des Förderbands (104) für einen Reinigungsvorgang reduzierbar ist.

16. Fördervorrichtung nach einem der Ansprüche 14 oder 15, **dadurch gekennzeichnet, dass** die Fördervorrichtung (100) eine Signaleinrichtung (182) zur Erzeugung eines optischen und/oder eines akustischen Signals, welches die Durchführung eines Reinigungsvorgangs mittels der Bandreinigungsvorrichtung (130) anzeigt, umfasst.
